# EUROPEAN PATENT SPECIFICATION

(11) **EP 2 858 261 B1**
(45) Date of publication and mention of the grant of the patent: **26.07.2017**
(21) Application number: 14746479.6
(22) Date of filing: 26.01.2014
(51) Int. Cl.: H04B 5/02, H04W 4/00, H04B 5/00

(54) **NEAR FIELD COMMUNICATION METHOD AND DEVICE**
NAHFELDKOMMUNIKATIONSVERFAHREN UND -VORRICHTUNG
PROCÉDÉ ET DISPOSITIF DE COMMUNICATION EN CHAMP PROCHE

(30) Priority: 29.01.2013 CN 201310034238
(43) Date of publication of application: 08.04.2015
(73) Proprietor: Huawei Device Co., Ltd., Shenzhen, Guangdong 518129 (CN)
(72) Inventor: WANG, Miao, Shenzhen Guangdong 518129 (CN); CHANG, Xinmiao, Shenzhen Guangdong 518129 (CN); JIN, Zhihao, Shenzhen Guangdong 518129 (CN)
(74) Representative: Körber, Martin Hans
(86) International application number: PCT/CN2014/071510
(87) International publication number: WO 2014/117701

(56) References cited:
- EP-A1- 2 801 930
- EP-A2- 2 192 810
- CN-A- 101 753 200
- CN-A- 101 754 493
- "Information technology - Telecommunications and information exchange between systems - Near Field Communication - Interface and Protocol (NFCIP-1)", INTERNATIONAL STANDARD ISO/IEC, XX, XX, vol. 18092, no. 1st edition, 1 April 2004 (2004-04-01), page 66pp, XP007905654,
- 'Information technology-Telecornmunications and information exchange between systems-Near Field Communication-Interface and Protocol (NFCIP-I)' INTERNATIONAL STANDARD ISO/IEC 18092 vol. 1ST ED., 01 April 2004, XP007905654
- IEEE COMPUTER SOCIETY: "IEEE Std 802.11-2012: Part 11: Wireless LAN Medium Access Control (MAC) and Physical Layer (PHY) Specifications", INTERNET CITATION, 29 March 2012 (2012-03-29), pages I,5-34,55,57,, XP002731582, Retrieved from the Internet: URL:http://ieeexplore.ieee.org/stamp/stamp .jsp?tp=&arnumber=6178212 [retrieved on 2014-10-23]

## Description

### TECHNICAL FIELD

Embodiments of the present invention relate to the field of wireless communications, and in particular, to a near field communication method and a near field communication device.

### BACKGROUND

NFC (Near Field Communication, near field communication) is a short-range wireless connection technology, and implements near-distance communication among electronic devices by means of magnetic induction based on an RFID (Radio Frequency Identification, radio frequency identification) technology. A user only needs to touch or approach a device to implement visual, safe, and contactless operations such as information exchange, content exchange and transaction. The NFC works at a frequency of 13.56MHz, and supports four types of speeds: 106kbit/second, 212kbit/second, 424kbit/second, and 848kbit/second. An effective communication range is 0-20 cm. Based on the RFID technology, a point-to-point communication function is added to the NFC. Devices of both parties of the point-to-point communication are equal, and devices of both parties of RFID communication are in a master-slave relationship.

In the NFC, NFC devices are classified into a master device and a target device. The master device is an initiator of the communication. The target device responds to a message sent by the master device, where a response message may be sent by means of load modulation or may be sent by generating a radio frequency field by the target device.

The NFC has three working modes: a card emulation mode, a card reader mode, and a point-to-point communication mode.

The card emulation mode: a device having an NFC function is emulated as a contactless card, such as an access card, a bank card, or a subway ticket. In this mode, even a mobile device runs out of battery or is powered off, the mobile device can still be used as a card. A card reader reads data from an NFC label of the mobile terminal, so as to implement collection of information.

The card reader mode: a mobile phone having an NFC function plays a role of a card reader, and reads data in an NFC label from a poster, a card, or a device which has the NFC label.

The point-to-point communication mode: two devices having an NFC function may establish a communication link of the two parties, and then perform data exchange. A typical application in this mode includes rapid establishment of a Bluetooth link, data transmission and contact card exchange between devices, and the like.

The NFC has two modes: an active communication mode (Active Communication Mode) and a passive communication mode (Passive Communication Mode).

In the passive communication mode, an NFC master device provides a radio frequency field (RF-field) in a whole communication process, and the NFC master device may select one type of transmission speed from 106kbps, 212kbps, 424kbps, and 848kbps to send data to another device.

In the active communication mode, when each device needs to send data to another device, the device must generate its own radio frequency field.

The NFC is divided into four stages: initialization, device activation, data communication, and device release.

Initialization: an NFC device is in a monitoring state, and performs initialization processes such as collision detection and technology detection.

Device activation: selection of a target device is completed, and negotiation of communication parameters such as a communication mode and a transmission rate is performed.

Data communication: after the device activation, data exchange between a master device and a target device may be performed.

Device release: after the data exchange is completed, a current connection is released.

Related specifications of the NFC are mainly made by an NFC Forum (NFC forum), so that interoperability among NFC devices is ensured. With gradual popularization of the NFC technology, many electronic products have been integrated with an NFC function, such as a printer, a television, a sound box, a mobile phone, and a camera. The NFC Forum has also designed an N-MARK identification to identify whether a device supports an NFC function.

An NFC protocol specifies many types, such as NFC-A, NFC-B, or NFC-F.

In an NFC-A passive communication mode, a master device sends a probe request message to discover a surrounding target device, and after the master device receives probe responses from multiple target devices, the master device starts an SDD (Single Device Detection, single device detection) process to obtain identities of all the target devices. In the NFC-A passive communication, an identification of an NFC device is represented as "NFCID1". After the master device acquires NFCID1s of all the target devices, the master device may select one target device from them to perform communication, and a corresponding target device is identified by using an NFCID 1. The master device, by sending an activation request message, performs communication parameter negotiation with the target device and activates the target device. After the target device is activated successfully, the master device may perform data exchange with the target device. After the data exchange is completed, the master device releases a connection by sending a release request message. In the single device detection process, the master device sends a single device detection request, receives a response message from the target device, and acquires a complete NFCID1 of the target device by means of successive bit collisions.

In an NFC-F passive communication mode, a master device sends a probe request message to discover a surrounding target device. After receiving the probe request message, a target device selects, according to information that is about a timeslot and is included in the message, a timeslot to make a response. The master device receives a response of the target device in different timeslots, so as to acquire an identification of the target device. In the NFC-F passive communication, an identification of an NFC device is represented as "NFCID2". If two or more target devices select a same timeslot to make a response, the master device may detect that a collision occurs in this timeslot, and therefore, the master device re-sends a probe request message, and the target device re-selects a timeslot to avoid occurrence of collision.

In NFC-A and NFC-F active communication modes, a master device sends an attribute request message to a target device, and because the target device works in an active communication mode, the target device generates its own radio frequency field; therefore, the target device replies a response message to the master device by means of a contention window. After the target device replies the response message successfully, the target device no longer responds to a subsequently received attribute request message, so as to ensure that the master device can discover all target devices.

An identification of an NFC device is a random number generated by the NFC device, and is used to uniquely identify the NFC device in a device discovery process. In the NFC-A passive communication, NFCID1s with a length of 4 bytes, 7 bytes, and 10 bytes are used, and in the NFC-F passive communication, an NFCID2 with a length of 8 bytes is used.

A device identification exchanged in an existing NFC process is a random number, which causes a limitation on NFC application.

"Information technology - Telecommunications and information exchange between systems - Near Field Communication - Interface and Protocol (NFCIP-1)" discloses an international standard regarding the interface and protocol for simple wireless communication between closely coupled devices. The standard defines both an Active and a Passive communication mode. In the Active communication mode, an Initiator starts an NFCIP-1 communication. The Target responds to an Initiator command using a self-generated modulation of a self-generated RF field. In the Passive communication mode, the Initiator generates the RF field and starts the communication. The Target responds to an Initiator command using a load modulation scheme. The standard also describes that all NFCIP-1 devices shall have communication capability on 106 kbps, 212 kbps or 424 kbps.

"Wireless LAN Medium Access Control (MAC) and Physical Layer (PHY) Specifications" discloses an standard regarding wireless LAN medium access control. The standard defines capability information field that are used to indicate requested or advertised optional capabilities.

### SUMMARY

Embodiments of the present invention provide a near field communication method and a near field communication device, so that exchanging or searching of a device type can be implemented by using a device identification.

According to a first aspect, a near field communication method is provided, including: acquiring, by a second device, a near field communication identification NFCID of a first device, where the NFCID of the first device carries first device type DT information, and the first DT information is used to indicate a device type such as a cash register or a fax supported by the first device; and extracting, by the second device, the first DT information from the NFCID of the first device wherein the acquiring, by the second device, a near field communication identification NFCID of a first device comprises: sending, by the second device, a first request message, wherein the first request message carries second DT information, and the second DT information is used to indicate a device type to be searched for by the second device; and receiving, by the second device, the NFCID of the first device from the first device, when it is determined, by the first device, that the first DT information matches the second DT information.

With reference to the first aspect, in an implementation manner, the extracting, by the second device, the first DT information from the NFCID of the first device includes: detecting, by the second device, a length of the NFCID of the first device; and extracting, by the second device according to the length of the NFCID of the first device, a corresponding byte or bit in the NFCID of the first device as the first DT information.

With reference to the first aspect and the foregoing implementation manner, in another implementation manner, the extracting, by the second device, the first DT information from the NFCID of the first device includes: extracting, by the second device, a predetermined byte or bit in the NFCID of the first device as the first DT information.

With reference to the first aspect and the foregoing implementation manners, in another implementation manner, the receiving, by the second device, the NFCID of the first device from the first device which determines that the first DT information matches the second DT information includes: if the second device detects a collision when receiving the NFCID of the first device, determining an effective collision bit; and sending, by the second device, a second request message, where the second request message carries the effective collision bit, where if the number n of effective collision bits is less than the number m of bits of the second DT information, the second request message further carries later (m-n) bits of the second DT information, where m and n are positive integers.

With reference to the first aspect and the foregoing implementation manners, in another implementation manner, the first request message is a single device detection request SDD_REQ message or a probe request message ATR_REQ.

According to a second aspect, a near field communication method is provided, including: generating, by a first device, an NFCID of the first device, where the NFCID of the first device carries first device type DT information, and the first DT information is used to indicate a device type such as a cash register or a fax supported by the first device; and sending, by the first device, the NFCID of the first device to the second device, wherein before the sending, by the first device, the NFCID of the first device to a second device, the method further comprises: receiving, by the first device, a first request message sent by the second device, wherein the first request message carries second DT information, and the second DT information is used to indicate a device type to be searched for by the second device; determining, by the first device, whether the NFCID matches the second DT information; wherein the sending, by the first device, the NFCID of the first device to the second device comprises: when it is determined that the NFCID matches the second DT information, sending, by the first device, the NFCID of the first device to the second device.

With reference to the second aspect, in an implementation manner, the generating, by a first device, an NFCID of the first device includes: filling, by the first device, the first DT information in a predetermined byte or bit in the NFCID of the first device; or filling, by the first device according to a length of the NFCID of the first device, the first DT information in a corresponding byte or bit in the NFCID of the first device.

With reference to the second aspect and the foregoing implementation manners, in another implementation manner, the method further includes: receiving, by the first device, a second request message sent by the second device, where the second request message carries an effective collision bit that is determined when the second device detects a collision when receiving the NFCID of the first device; and determining, by the first device according to a result of matching the effective collision bit and the NFCID of the first device, whether to send the NFCID of the first device to the second device again.

With reference to the second aspect and the foregoing implementation manners, in another implementation manner, the number of effective collision bits is n and n is a positive integer; and the determining, by the first device according to a result of matching the effective collision bit and the NFCID of the first device, whether to send the NFCID of the first device to the second device again includes: if the effective collision bit is different from the first n bits of the NFCID, determining that the NFCID of the first device is no longer to be sent; if the effective collision bit is the same as the first n bits of the NFCID and n≥m, determining that the NFCID of the first device is to be sent again, where m is the number of bits of the second DT information and m is a positive integer; if the effective collision bit is the same as the first n bits of the NFCID and n<m, determining that the NFCID of the first device is to be sent again when (m-n) bits after the effective collision bit are the same as a corresponding bit of the NFCID; and if the effective collision bit is the same as the first n bits of the NFCID and n<m, determining that the NFCID of the first device is no loner to be sent when (m-n) bits after the effective collision bit are different from a corresponding bit of the NFCID.

With reference to the second aspect and the foregoing implementation manners, in another implementation manner, the first request message is a single device detection request SDD_REQ message, or a probe request message ATR_REQ.

According to a third aspect, a near field communication device is provided, including: a generating unit, configured to generate an NFCID of the near field communication device, where the NFCID of the near field communication device carries first device type DT information, and the first DT information is used to indicate a device type such as a cash register or a fax supported by the near field communication device; and a sending unit, configured to send the NFCID of the near field communication device to a second device, wherein the near field communication device further comprises: a receiving unit, configured to receive a first request message sent by the second device, wherein the first request message carries second DT information, and the second DT information is used to indicate a device type to be searched for by the second device; and a determining unit, configured to determine whether the NFCID matches the second DT information; wherein the sending unit is specifically configured to: when the determining unit determines that the NFCID matches the second DT information, send the NFCID of the near field communication device to the second device.

With reference to the third aspect, in an implementation manner, the generating unit is specifically configured to fill the first DT information in a predetermined byte or bit in the NFCID of the near field communication device; or fill, according to a length of the NFCID of the near field communication device, the first DT information in a corresponding byte or bit in the NFCID of the near field communication device.

With reference to the third aspect and the foregoing implementation manners, in another implementation manner, the receiving unit is further configured to receive a second request message sent by the second device, where the second request message carries an effective collision bit that is determined when the second device detects a collision when receiving the NFCID of the first device; and the determining unit is further configured to determine, according to a result of matching the effective collision bit and the NFCID of the first device, whether to send the NFCID of the first device to the second device again.

With reference to the third aspect and the foregoing implementation manners, in another implementation manner, the number of effective collision bits is n and n is a positive integer; and the determining unit is specifically configured to: if the effective collision bit is different from the first n bits of the NFCID, determine that the NFCID of the first device is no longer to be sent; if the effective collision bit is the same as the first n bits of the NFCID and n≥m, determine that the NFCID of the first device is to be sent again, where m is the number of bits of the second DT information, and m is a positive integer; if the effective collision bit is the same as the first n bits of the NFCID and n<m, determine that the NFCID of the first device is to be sent again when (m-n) bits after the effective collision bit are the same as a corresponding bit of the NFCID; and if the effective collision bit is the same as the first n bits of the NFCID and n<m, determine that the NFCID of the first device is no longer to be sent when (m-n) bits after the effective collision bit are different from a corresponding bit of the NFCID.

In the embodiments of the present invention, an NFCID of an NFC device carries information about a device type/device capability supported by the NFC device, so that exchanging or searching of a device type/device capability can be implemented by using the NFCID.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a near field communication method according to an embodiment of the present invention;
FIG. 2 is a flowchart of a near field communication method according to another embodiment of the present invention;
FIG. 3 is a schematic flowchart of a near field communication process according to an embodiment of the present invention;
FIG. 4 is a schematic flowchart of a near field communication process according to an embodiment of the present invention;
FIG. 5 is an exemplary flowchart of acquiring DT information of a target device by a master device according to an embodiment of the present invention;
FIG. 6 is a schematic diagram of message exchange between the master device and the target device in the embodiment of FIG. 5;
FIG. 7A and FIG. 7B are schematic flowcharts of a process of searching for a target device supporting a specific device type according to an embodiment of the present invention;
FIG. 8 is a schematic flowchart of a process of searching for a target device supporting a specific device type according to an embodiment of the present invention;
FIG. 9 is a schematic diagram of message exchange between a master device and the target device in the embodiments of FIG. 7 and FIG. 8;
FIG. 10 is a schematic flowchart of a process of acquiring a device type according to an embodiment of the present invention;
FIG. 11 is a schematic diagram of message exchange between a master device and a target device in the embodiment of FIG. 10;
FIG. 12A and FIG. 12B are schematic flowcharts of a process of acquiring a device type according to another embodiment of the present invention;
FIG. 13 is a schematic diagram of message exchange between a master device and a target device in the embodiment of FIG. 12;
FIG. 14 is a schematic flowchart of a process of searching for a target device supporting a specific device type according to another embodiment of the present invention;
FIG. 15 is a schematic flowchart of a process of searching for a target device supporting a specific device type according to another embodiment of the present invention;
FIG. 16 is a block diagram of an NFC device according to an embodiment of the present invention;
FIG. 17 is a block diagram of an NFC device according to another embodiment of the present invention;
FIG. 18 is a block diagram of an NFC device according to another embodiment of the present invention; and
FIG. 19 is a block diagram of an NFC device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Generally, an NFC device may be divided into two functional entities: a DH (Device Host, device host) and an NFCC (NFC controller). The DH is responsible for managing operating environments of the NFC device and a peripheral (including the NFCC), such as initialization, configuration, and power source management. The NFCC is responsible for transmitting data on an NFC radio frequency interface. The NFCC can be implemented by using an independent chip, and the DH can be implemented by a processor executing a corresponding instruction. A logical interface between the DH and the NFCC is referred to as an NCI (NFC Controller Interface).

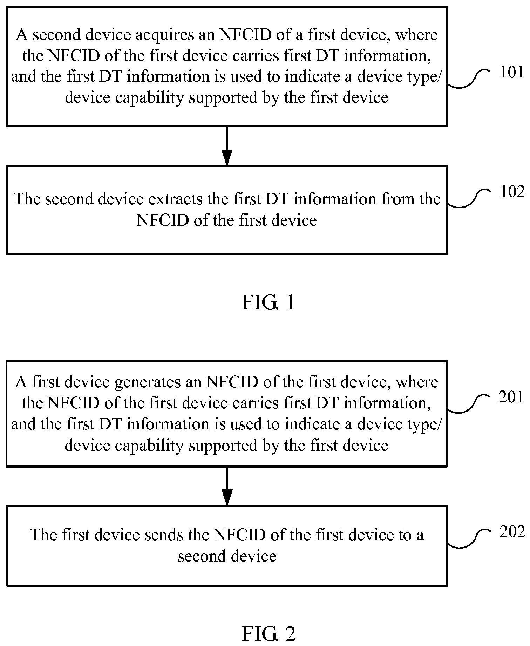

FIG. 1 is a flowchart of a near field communication method according to an embodiment of the present invention. The method shown in FIG. 1 is executed by an NFC device, and specifically, executed by an NFC device that receives an NFCID.

101: A second device acquires an NFCID of a first device, where the NFCID of the first device carries first DT (Device Type, device type/device capability) information, and the first DT information is used to indicate a device type/device capability supported by the first device.

The first device and the second device are both NFC devices, and may be a master device and a target device in a near field communication process. The first device and the second device may work in an active or passive mode. The first device is an NFC device that generates and sends an NFCID, and the second device is an NFC device that receives the NFCID.

102: The second device extracts the first DT information from the NFCID of the first device.

In the embodiment of the present invention, an NFCID of an NFC device carries information about a device type/device capability supported by the NFC device, so that exchanging or searching of a device type/device capability can be implemented by using the NFCID.

The method shown in FIG. 1 may be executed in a device identification exchanging process of a device discovery procedure, or may be executed in a device searching process. Specific examples of executing the method shown in FIG. 1 in different procedures are described with reference to specific embodiments.

Optionally, as an embodiment, when the method shown in FIG. 1 is executed in the device searching process, in step 101, the second device may send a first request message, where the first request message carries second DT information, and the second DT information is used to indicate a device type/device capability to be searched for by the second device. The second device receives the NFCID of the first device from the first device, when it is determined, by the first device, that the first DT information matches the second DT information.

A collision may occur in a process of receiving the NFCID of the first device, for example, multiple devices feed back NFCIDs to the second device at the same time. Optionally, as another embodiment, if the second device detects a collision when receiving the NFCID of the first device, an effective collision bit is determined; and then, the second device sends a second request message, where the second request message carries the effective collision bit. If the number n of effective collision bits is less than the number m of bits of the second DT information, the second request message further carries later (m-n) bits of the second DT information, where m and n are positive integers.

Optionally, as another embodiment, the foregoing first request message may be a single device detection request SDD_REQ message or a probe request message ATR_REQ.

The first request message may implicitly or explicitly indicate whether the first request message is used to search for a specific device type/device capability. For example, when in the SDD_REQ message, SEL_PAR=20h and a total length of the SDD_REQ message is greater than 2 bytes, it may be implicitly indicated that the SDD_REQ message carries the second DT information. Alternatively, for example, first request messages of different types are explicitly indicated by setting a command field in the first request message and by using different command field values. For example, when a CMD1 of the ATR_REQ is a specific value (for example, 0Ch), it is indicated that the ATR_REQ carries the second DT information.

In this way, the embodiment of the present invention can solve a collision problem in a device searching process, and is compatible with an existing collision resolution mechanism.

In the embodiment of the present invention, a specific manner in which the NFCID carries DT information is not limited. For example, the NFCID may carry the DT information in a predetermined byte or bit in the NFCID. In this case, in step 102, the second device extracts a predetermined byte or bit in the NFCID of the first device as the first DT information.

For another example, a position of a byte or bit in which the NFCID carries the DT information may change according to a length of the NFCID. In this case, in step 102, the second device may detect a length of the NFCID of the first device, and the second device extracts, according to the length of the NFCID of the first device, a corresponding byte or bit in the NFCID of the first device as the first DT information.

FIG. 2 is a flowchart of a near field communication method according to another embodiment of the present invention. The method shown in FIG. 2 is executed by an NFC device, and specifically, executed by an NFC device that generates and sends an NFCID. The method shown in FIG. 2 is corresponding to that shown in FIG. 1, and to avoid repetition, repeated descriptions are omitted appropriately.

201: A first device generates an NFCID of the first device, where the NFCID of the first device carries first DT information, and the first DT information is used to indicate a device type/device capability supported by the first device.

The first device and a second device are both NFC devices, and may be a master device and a target device in a near field communication process. The first device and the second device may work in an active or passive mode. The first device is an NFC device that generates and sends an NFCID, and the second device is an NFC device that receives the NFCID.

202: The first device sends the NFCID of the first device to a second device.

In the embodiment of the present invention, an NFCID of an NFC device carries information about a device type/device capability supported by the NFC device, so that exchanging or searching of a device type/device capability can be implemented by using the NFCID.

The method shown in FIG. 2 may be executed in a device identification exchanging process of a device discovery procedure, or may be executed in a device searching process. Specific examples of executing the method shown in FIG. 2 in different procedures are described with reference to specific embodiments.

In the embodiment of the present invention, a specific manner in which the NFCID carries DT information is not limited. Optionally, as an embodiment, the NFCID may carry the DT information in a predetermined byte or bit in the NFCID. In this case, in step 201, the first device may fill the first DT information in a predetermined byte or bit in the NFCID of the first device. Alternatively, a position of a byte or bit in which the NFCID carries the DT information may change according to a length of the NFCID. In this case, in step 201, the first device may fill, according to a length of the NFCID of the first device, the first DT information in a corresponding byte or bit in the NFCID of the first device.

Optionally, as another example, when the method shown in FIG. 2 is executed in the device searching process, the first device may receive a first request message sent by the second device, where the first request message carries second DT information, and the second DT information is used to indicate a device type/device capability to be searched for by the second device. The first device determines whether the NFCID matches the second DT information. In this case, in step 202, when it is determined that the NFCID matches the second DT information, the first device sends the NFCID of the first device to the second device.

It should be noted that, if the NFCID matches the second DT information, it indicates that device types supported by the first device include the device type/device capability to be searched for by the second device. For example, if the DT information is represented by using a set, the second DT information is a subset of the first DT information or is the same as the first DT information. For another example, if the DT information is represented in a bitmap (bitmap) manner in the following Table 4, when a bit of the second DT information is set to "1", a corresponding bit of the first DT information is also set to "1"'; however, when a bit of the second DT information is set to "0", a corresponding bit of the first DT information may be set to "1" or may be set to "0".

Optionally, as another embodiment, the first device may further receive a second request message sent by the second device, where the second request message carries an effective collision bit that is determined when the second device detects a collision when receiving the NFCID of the first device. The first device determines, according to a result of matching the effective collision bit and the NFCID of the first device, whether to send the NFCID of the first device to the second device again.

Specifically, it is assumed that the number of effective collision bits is n, and the number of bits of the second DT information is m, where m and n are positive integers. When the first device determines, according to the result of matching the effective collision bit and the NFCID of the first device, whether to send the NFCID of the first device to the second device again, if the effective collision bit is different from the first n bits of the NFCID, it is determined that the NFCID of the first device is no longer to be sent; or if the effective collision bit is the same as the first n bits of the NFCID and n≥m, it is determined that the NFCID of the first device is to be sent again; or if the effective collision bit is the same as the first n bits of the NFCID and n<m, it is determined that the NFCID of the first device is to be sent again when (m-n) bits after the effective collision bit are the same as a corresponding bit of the NFCID; or if the effective collision bit is the same as the first n bits of the NFCID and n<m, it is determined that the NFCID of the first device is no longer to be sent when (m-n) bits after the effective collision bit are different from a corresponding bit of the NFCID.

Optionally, as another embodiment, the foregoing first request message may be a single device detection request SDD_REQ message or a probe request message ATR_REQ.

The first request message may implicitly or explicitly indicate whether the first request message is used to search for a specific device type/device capability. For example, when in the SDD_REQ message, SEL_PAR=20h and a total length of the SDD_REQ message is greater than 2 bytes, it may be implicitly indicated that the SDD_REQ message carries the second DT information. Alternatively, for example, first request messages of different types are explicitly indicated by setting a command field in the first request message and by using different command field values. For example, when a CMD1 of the ATR_REQ is a specific value (for example, 0Ch), it is indicated that the ATR_REQ carries the second DT information.

In this way, the embodiment of the present invention can solve a collision problem in a device searching process, and is compatible with an existing collision resolution mechanism.

The DT information may be configured by sending, by a DH of the NFC device (the master device or the target device), a configuration command to an NFCC of the NFC device. The configuration command may carry information about a device type supported by the NFC device. For example, the foregoing configuration command may be implemented by extending an existing CORE_SET_CONFIG_CMD. A dedicated configuration command may also be newly added, which is not limited in the embodiment of the present invention.

The NFCC of the NFC device stores the DT information. In this way, configuration of the DT information in the NFC device can be implemented. For example, a method for configuring the DT information may be executed in an initial setting process, or executed when the device type/device capability is changed.

In this way, a DH of the master device can perform corresponding function processing according to a device type/device capability of the target device, thereby enhancing application experience of a user. For example, the DH may start an application program matching the device type, for example, when the target device (for example, a mobile phone) approaches a printer, a file transmission service of the mobile phone is started immediately; or when the master device (for example, a mobile phone) approaches an NFC module (the target device) in a driving cab of a vehicle, Bluetooth earphone paring is started immediately, or an application program of collecting a vehicle parameter is started immediately.

It should be noted that, a specific form of a "storing" operation is not limited in the embodiment of the present invention, which may be long-term static storage, or may be short-term storage, such as cache.

In addition, an unrelated device can be filtered out by searching for a matched device by using a started application program. For example, if the master device (for example, a mobile phone) starts a music player, only a target device having a loudspeaker function responds to the device; or if the master device (for example, a mobile phone) starts a printing application program, only a target device having a printing function can make a response.

The foregoing examples are only used to help a person skilled in the art to understand possible application scenarios of the embodiment of the present invention, and a specific application manner of the device type is not limited in the embodiment of the present invention.

The DT information in the embodiment of the present invention is described in further detail with reference to specific examples in the following. It should be noted that, the following embodiments are only used to help a person skilled in the art to better understand the present invention instead of limiting the scope of the present invention.

The DT information may represent a device type. Table 1 shows an example of a description of the device type. An NFC device may belong to multiple classifications, that is, may support multiple device types at the same time.

**Table 1 Examples of device types**

| **Device Classification** | **Description** |
|---|---|
| Cash register | Payment related device |
| Audio | Playing data in an audio format |
| Video | Playing data in a video format |
| Display | Display device, used to display a static picture and the like |
| Printing | Printer device |
| Fax | Fax device |
| ... | |

In the embodiment of the present invention, the DT information may further represent a device capability. Table 2 shows an example of a description of the device capability. An NFC device may belong to multiple classifications, that is, may support multiple device capabilities at the same time.

**Table 2 Examples of device capabilities**

| **Device Capability** | **Description** |
|---|---|
| WIFI | Supporting WIFI |
| Bluetooth | Supporting Bluetooth |
| Audio playback | Supporting audio playback |
| Printing | Supporting printing |
| Fax | Supporting fax |
| ... | |

In the following, the DT information in Table 1 is used as an example for description; however, the embodiment of the present invention may be similarly applied to the DT information in Table 2, and such an application also falls within the scope of the embodiment of the present invention.

Table 3 shows an example of a device type data format in the embodiment of the present invention. In the embodiment of the present invention, a device type parameter "DEVICE_TYPE" is added, a specific definition is shown in Table 3, and a length is 2 bytes (byte). However, a specific length of the device type parameter is not limited in the embodiment of the present invention.

**Table 3 Example of a device type parameter "DEVICE TYPE"**

| | |
|---|---|
| Type | 02h |
| Length | 02h |
| Format | See Table 4 |

Table 4 shows an example of a format of the device type parameter "DEVICE_TYPE" in an embodiment of the present invention, where h represents hexadecimal. In the example in Table 4, the device type parameter "DEVICE_TYPE" uses a bitmap (bitmap) coding format; however, the format of the device type parameter is not limited in the embodiment of the present invention. It should be noted that, in all tables of the embodiment of the present invention, all bits of all bytes are arranged in reverse order.

**Table 4 Examples of coding formats of a device type parameter**

| **b7** | **b6** | **b5** | **b4** | **b3** | **b2** | **b1** | **b0** | **b7** | **b6** | **b5** | **b4** | **b3** | **b2** | **b1** | **b0** | **Type** |
|---|---|---|---|---|---|---|---|---|---|---|---|---|---|---|---|---|
| x | x | x | x | x | x | x | x | x | x | | | | | | 1 | Cash register |
| x | x | x | x | x | x | x | x | x | x | | | | | 1 | | Audio |
| x | x | x | x | x | x | x | x | x | x | | | | 1 | | | Video |
| x | x | x | x | x | x | x | x | x | x | | | 1 | | | | Display |
| x | x | x | x | x | x | x | x | x | x | | 1 | | | | | Printing |
| x | x | x | x | x | x | x | x | x | x | 1 | | | | | | Fax |

As shown in Table 4, an NFC device may support multiple device types (or device capabilities). If the device has video and display capabilities, b2 and b3 of a first byte are set to 1. In Table 4, "x" represents a reserved bit.

Table 5 shows examples in which an NFCID carries DT information in an embodiment of the present invention.

**Table 5 Examples of an NFCID**

| **NFCID** | **Length** | **Bytes of DT Information** |
|---|---|---|
| NFCID1 (NFC-A) | 4 bytes | NFCID11, NFCID 12 |
| | 7 bytes or 10 bytes | NFCID10, NFCID11 or NFCID11, NFCID 12 |
| NFCID2 (NFC-F) | 8 bytes | Any two successive NFCID2x |

The NFCID may carry the DT information in a predetermined byte or bit in the NFCID. For example, as shown in Table 5, a device identification of an NFC-F type is represented as NFCID2, and a length is 8 bytes, so that any two predetermined successive bytes NFCID2x in the 8-byte NFCID2 may be used to carry the DT information, where "x" represents a corresponding serial number of a byte in the NFCID2, and a value range of x is any two predetermined successive integers from 0 to 7. In this case, the NFC device may extract two predetermined bytes from a received NFCID as the DT information, or fill the DT information in two predetermined bytes when an NFCID is generated.

A position of a byte or bit in which the NFCID carries the DT information may change according to a length of the NFCID. For example, a device identification of an NFC-A type is represented as NFCID 1, and a length may be 4 bytes, 7 bytes or 10 bytes. In the example in Table 5, if the length of the NFCID 1 is 4 bytes, two bytes NFCID11 and NFCID 12 in the NFCID1 may be used to carry the DT information. If the length of the NFCID 1 is 7 bytes or 10 bytes, two bytes NFCID 10 and NFCID 11 in the NFCID 1 may be used to carry the DT information, or two bytes NFCID 11 and NFCID 12 in the NFCID 1 may be used to carry the DT information. The NFCID 10 represents the first byte of the NFCID 1, the NFCID11 represents the second byte of the NFCID 1, and the NFCID 12 represents the third byte of the NFCID 1.

The bytes described in Table 5 are only an example in which the NFCID carries the DT information, and a specific position of the DT information in the NFCID is not limited in the embodiment of the present invention, for example, may be two non-consecutive bytes, or may also be other bytes.

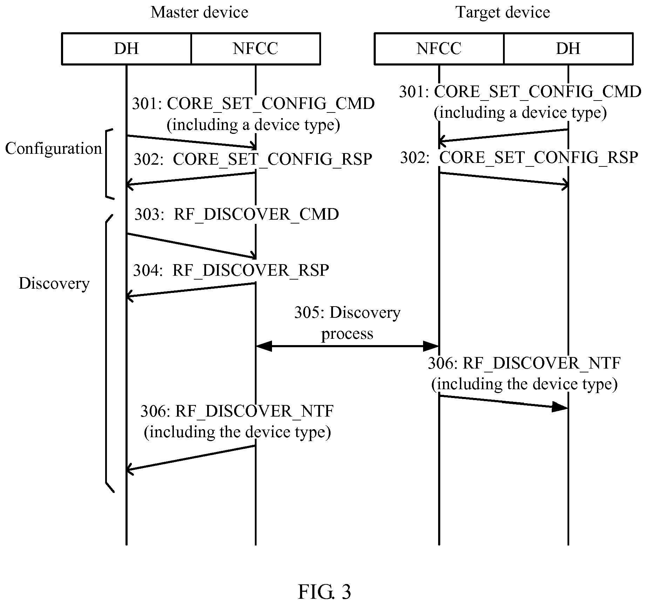

FIG. 3 is a schematic flowchart of a near field communication process according to an embodiment of the present invention. In the embodiment of FIG. 3, a same reference numeral is used to denotes same step. The embodiment of FIG. 3 is a method for configuring a device type and reporting the device type in a device type exchanging process.

301: A DH sends a configuration command CORE_SET_CONFIG_CMD to an NFCC, where the command is used to configure a related parameter of the NFCC.

A difference from an existing configuration command lies in that, the configuration command CORE_SET_CONFIG_CMD in the embodiment of the present invention includes a to-be-configured device type.

For example, step 301 may be executed in an initial setting process, or may be executed when a device type is changed.

302: After receiving the configuration command, the NFCC feeds back a response message CORE_SET_CONFIG_RSP to the DH to indicate whether configuration is successful.

Steps 301 and 302 are a process of setting the device type. This process does not need to be executed every time before a discovery process is started, and only needs to be executed during initial setting, or executed when configuration of the device type is changed. Therefore, steps 301 and 302 are an optional process.

303: The DH sends an RF_DISCOVER_CMD command to the NFCC to trigger the NFCC to start a device discovery process.

304: The NFCC feeds back a response message to the DH to indicate that the device discovery process is being performed.

305: A master device and a target device execute a discovery process for exchanging the device type.

306: When discovering a surrounding target device, an NFCC of the master device sends a radio frequency discovery notification message RF_DISCOVER_NTF to a DH of the master device to notify a discovery result. A difference from an existing radio frequency discovery notification message lies in that, the radio frequency discovery notification message RF_DISCOVER_NTF in the embodiment of the present invention includes a device type of the target device.

Likewise, when discovering a surrounding master device, an NFCC of the target device sends a radio frequency discovery notification message RF_DISCOVER_NTF to a DH of the target device to notify a discovery result. A difference from an existing radio frequency discovery notification message lies in that, the radio frequency discovery notification message RF_DISCOVER_NTF in the embodiment of the present invention includes a device type of the master device.

For example, a "Device Type" (device type) field may be added in the RF_DISCOVER_NTF message, where the "Device Type" (device type) field carries the device type parameters shown in Table 3.

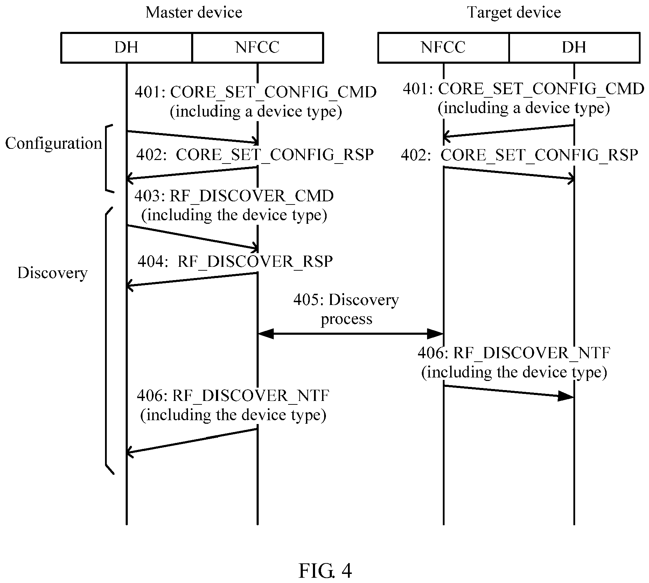

FIG. 4 is a schematic flowchart of a near field communication process according to an embodiment of the present invention. In the embodiment of FIG. 4, a same reference numeral is used to denotes same step. The embodiment of FIG. 4 is a method for configuring a device type and reporting the device type in a device type searching process.

It should be noted that, in the embodiment of FIG. 4, at the same time of searching for a device type, exchanging of the device type is also executed; however, the embodiment of the present invention is not limited thereto. For example, when exchanging of the device type is not executed, step 406 of a target device may be omitted.

Steps 401 to 402 are the same as steps 301 to 302 shown in FIG. 3, and therefore, repeated descriptions are omitted.

403: The DH sends an RF_DISCOVER_CMD command to the NFCC to trigger the NFCC to start a device discovery process, where the command includes a device type that is to be searched for.

404: The NFCC feeds back a response message to the DH to indicate that the device discovery process is being performed.

405: A master device and a target device execute a discovery process for searching for a device type.

Step 406 is the same as step 306 shown in FIG. 3, and therefore, repeated descriptions are omitted.

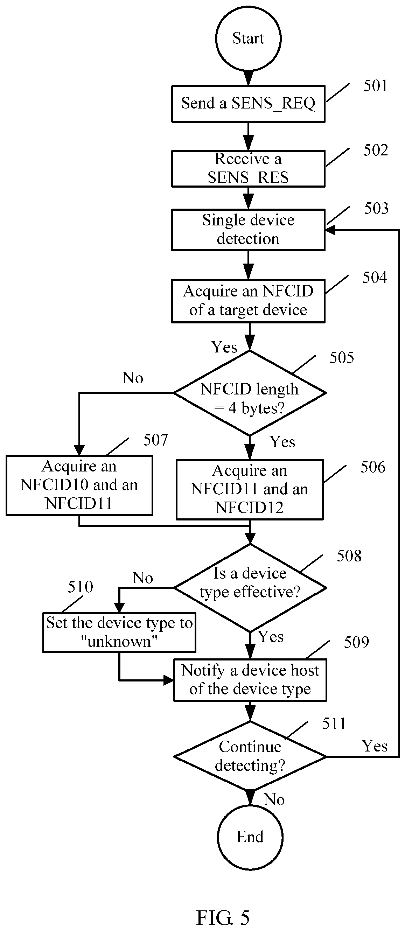

An embodiment that in an NFC-A passive communication process, a master device acquires, by means of an identification exchanging or device searching process, an NFCID of a target device so as to acquire a device type supported by the target device is described in the following with reference to FIG. 5 to FIG. 9.

FIG. 5 is an exemplary flowchart of acquiring DT information of a target device by a master device according to an embodiment of the present invention. The method shown in FIG. 5 is executed by the master device.

501: A master device sends a SENS_REQ (a probe request) message to a target device to discover a surrounding target device.

502: After receiving the SENS_REQ, the target device feeds back a SENS_RES (a probe response) message to the master device.

503: The master device starts a single device detection (SDD) process.

504: The master device acquires NFCID1s of all target devices.

505: The master device detects whether a length of the NFCID1 of the target device is 4 bytes.

506: If it is determined in step 505 that the length of the NFCID1 is 4 bytes, save an NFCID 11 and an NFCID 12 as a device type.

In the embodiment of FIG. 5 and subsequent embodiments, when the length of the NFCID 1 is 4 bytes, the NFCID 11 and the NFCID 12 are extracted as DT information, however, which is not limited in the embodiment of the present invention. For example, a corresponding byte or bit may also be extracted according to another configuration as the DT information.

507: If it is determined in step 505 that the length of the NFCID1 is not 4 bytes, that is, the length of the NFCID1 is 7 bytes or 10 bytes, save an NFCID10 and an NFCID11 as a device type.

In the embodiment of FIG. 5 and subsequent embodiments, when the length of the NFCID1 is 7 bytes or 10 bytes, the NFCID10 and the NFCID 11 are extracted as the DT information, however, which is not limited in the embodiment of the present invention. For example, the NFCID11 and the NFCID12 may also be extracted as the DT information, as shown in Table 5; or a corresponding byte or bit is extracted according to another configuration as the DT information.

508: The master device verifies whether the device type is effective. If the device type is effective, step 509 is executed, and if the device type is ineffective, step 510 is executed.

509: An NFCC of the master device notifies a DH of the master device that the target device is discovered, and carries a device type of the target device.

510: Set the device type to "unknown", and then execute step 509.

511: The master device determines whether to continue detection, and if it is determined that the detection is to be continued, step 503 is executed; otherwise, the process ends.

In this way, exchanging of a device type can be implemented by using an NFCID.

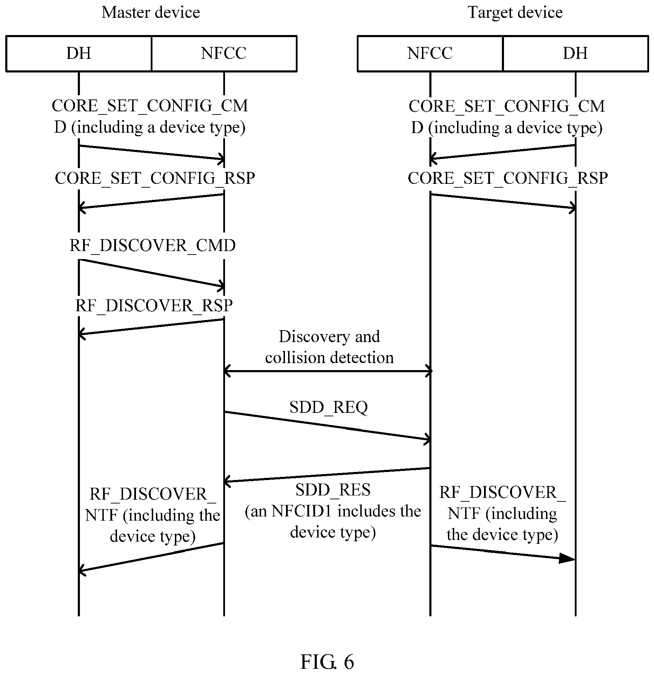

FIG. 6 is a schematic diagram of message exchange between the master device and the target device in the embodiment of FIG. 5. For definitions of messages shown in FIG. 6, reference may be made to the embodiments shown in FIG. 3 to FIG. 5, and therefore, repeated descriptions are not provided.

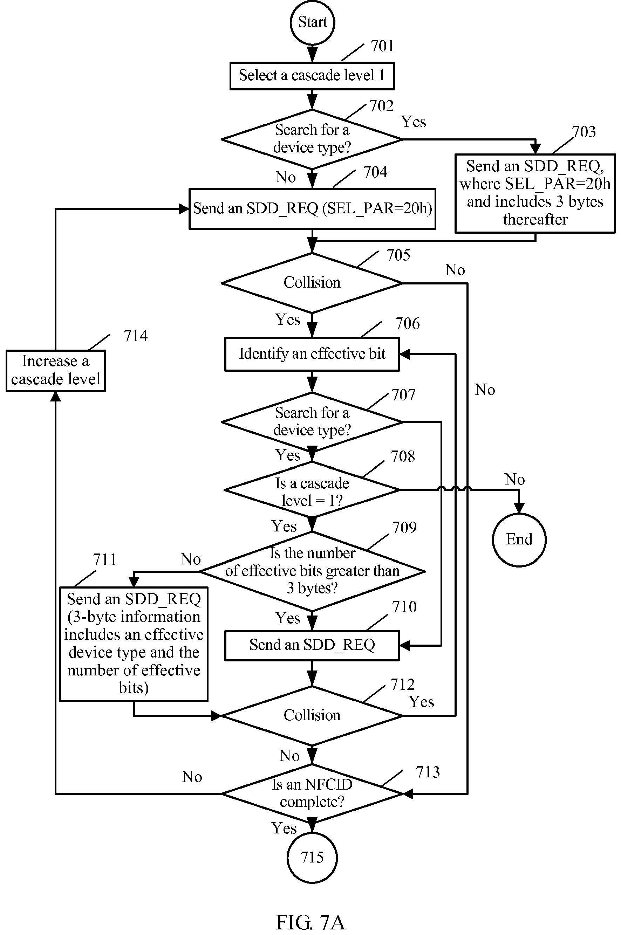

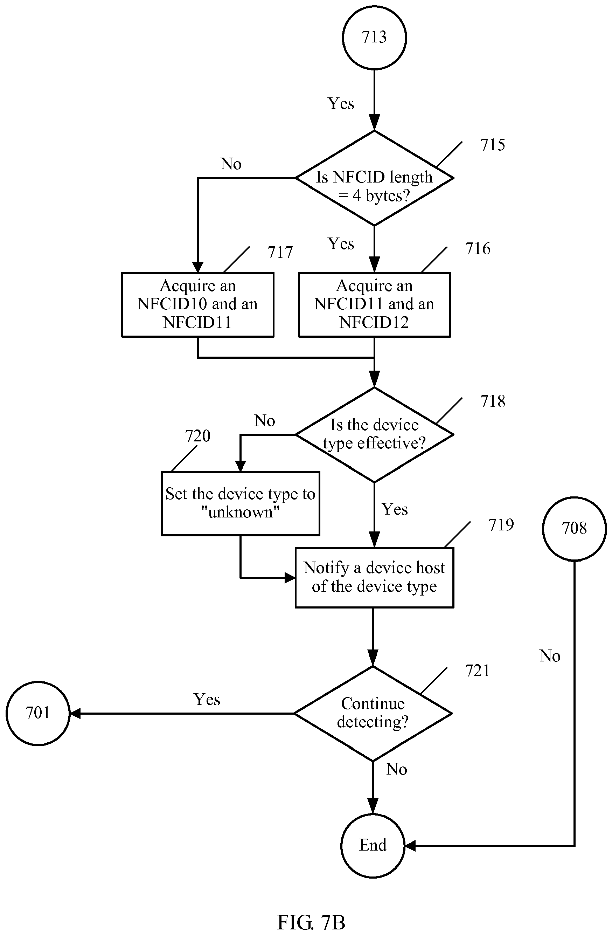

FIG. 7A and FIG. 7B are schematic flowcharts of a process of searching for a target device supporting a specific device type according to an embodiment of the present invention. The method shown in FIG. 7A to FIG. 7B is executed by a master device.

701: A master device selects a cascade level 1 after sending a SENS_REQ message and receiving a SENS_RES message fed back by the target device.

702: The master device determines whether to search for a target device supporting a specific device type. If a determination result is yes, step 703 is executed; and if the determination result is no, step 704 is executed.

703: The master device sends an SDD_REQ message, where SEL_PAR=20h, and the SDD_REQ message further includes 3 bytes after an SEL_PAR field, and the 3 bytes carries second DT information, which indicates a device type to be searched for by the master device.

The second DT information of 3 bytes is only an example, and a length of the second DT information in the embodiment of the present invention is not limited to 3 bytes.

It should be noted that, an SDD_REQ message frame includes at least a one-byte SEL_CMD field and a one-byte SEL_PAR field. According to an existing protocol, if a hexadecimal value of the SEL_PAR is represented as ij, where i and j are positive integers, it indicates that the SEL_PAR in the SDD_REQ message is followed by [(i-2)×8+j] effective collision bits.

If the target device finds that an actual length of the SDD_REQ message frame is greater than a length indicated by the SEL_PAR, it may be understood as that the SDD_REQ message carries the second DT information, which is used to search for the specific device type. In this example, the SDD_REQ message frame is 5 bytes, but a value of the SEL_PAR is 20h (indicating that the length of the SDD_REQ is 2 bytes and no effective collision bit is carried), and the target device may be understood as that 3 bytes after the SEL_PAR field is the second DT information instead of the effective collision bit.

704: The master device sends the SDD_REQ message, where SEL_PAR=20h, and no bit is carried after the SEL_PAR. The SDD_REQ message sent by the master device is an SDD_REQ message conforming to the existing protocol.

705: The master device detects whether there is any collision. If there is a collision, step 706 is executed; otherwise, step 713 is executed.

706: The master device determines an effective collision bit.

707: The master device determines whether to search for the target device supporting the specific device type. If yes, step 708 is executed; otherwise, step 710 is executed.

708: The master device checks whether a cascade level is 1. If yes, step 709 is executed; otherwise, the process ends.

709: The master device determines whether the number (it is assumed as n) of effective collision bits is greater than or equal to a length (3 bytes) of the second DT information. If yes, step 710 is executed; otherwise, step 711 is executed.

710: Send an SDD_REQ message, where the effective collision bit is included after an SEL_PAR field of the SDD_REQ message. This is an SDD_REQ message conforming to the existing protocol and used for collision resolution.

711: Send an SDD_REQ message, where the effective collision bit is included in 3 bytes after an SEL_PAR field. Specifically, n effective collision bits are first filled in the 3 bytes after the SEL_PAR field, and the remaining bits thereafter still use corresponding bits of the second DT information in step 703. In other words, the effective collision bits are used to cover the first n bits in the second DT information.

712: The master device detects whether a collision occurs in the received SDD_RES (single device detection response) message. If the collision occurs, step 706 is executed; otherwise, step 713 is executed.

713: The master device determines whether an obtained NFCID1 is complete. If yes, step 715 is executed; otherwise, step 714 is executed.

714: Add a cascade level, and then execute step 704.

715 to 720 are the same as 505 to 510 shown in FIG. 5, and therefore, are not repeated herein.

721: The master device determines whether to continue detection, and if it is determined that the detection is to be continued, step 701 is executed; otherwise, the process ends.

In this way, a master device can search for a target device supporting a specific device type, which can solve a feedback collision problem of multiple target devices, and is also compatible with an existing collision resolution mechanism.

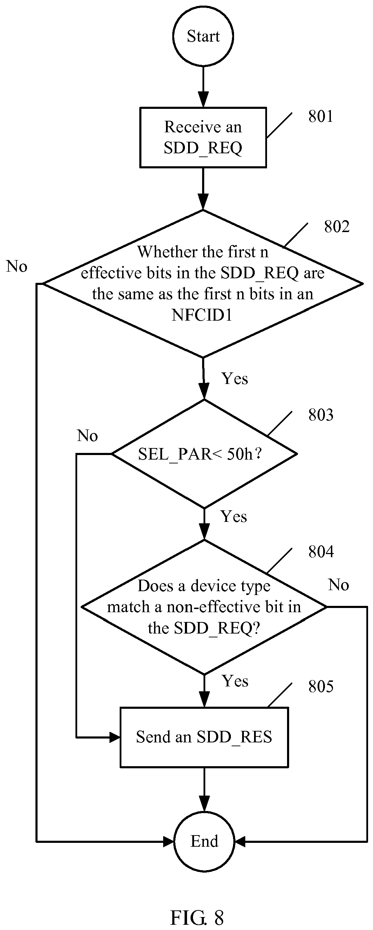

FIG. 8 is a schematic flowchart of a process of searching for a target device supporting a specific device type according to an embodiment of the present invention. The method shown in FIG. 8 is executed by the target device.

801: A target device receives an SDD_REQ message.

If the target device finds that an actual length of an SDD_REQ message frame is greater than a length indicated by an SEL_PAR, it may be understood as that the SDD_REQ message carries second DT information, which is used to search for a specific device type.

For example, with reference to the example shown in FIG. 7, the SDD_REQ message frame sent in step 703 is 5 bytes, but a value of the SEL_PAR is 20h (indicating that the length of the SDD_REQ is 2 bytes and no effective collision bit is carried), and the target device may understand as that 3 bytes after an SEL_PAR field is the second DT information instead of an effective collision bit. In this case, the target device detects whether an NFCID of the target device matches the second DT information, and when the NFCID of the target device matches the second DT information, the target device sends an SDD_RES message to the master device, where the SDD_RES message carries an NFCID1 of the target device.

If the value of the SEL_PAR is not 20h, and the number of bits that is represented by the value of the SEL_PAR in the SDD_REQ message is n bits greater than the number of bits that is represented by 20h (that is, 2 bytes=16 bits), it indicates that n bits after the SEL_PAR field are effective collision bits, and in this case, step 802 is executed.

802: The target device detects whether the first n bits after a SEL_PAR field in the SDD_REQ message match the first n bits of an NFCID1 of the target device. If yes, step 803 is executed; otherwise, the process ends.

803: The target device detects whether an SEL_PAR of the SDD_REQ message is less than 50h. If yes, step 804 is executed; otherwise, step 805 is executed.

If the SEL_PAR is greater than or equal to 50h, it indicates that only an effective collision bit is carried after the SEL_PAR field, and no bit of the second DT information is carried.

If the SEL_PAR is less than 50h, it indicates that n bits of effective collision bits are carried after the SEL_PAR field, and non-effective collision bits are also carried after the effective collision bits. Specifically, the non-effective collision bits are later (24-n) bits of the second DT information, and herein, 24 is the number of bits of the second DT information (which is equal to 3 bytes).

804: The target device determines whether a device type of the target device matches a non-effective collision bit after the SEL_PAR field in the SDD_REQ message. If the device type of the target device matches the non-effective collision bit after the SEL_PAR field in the SDD_REQ message, step 805 is executed; otherwise, the process ends.

805: The target device returns an SDD_RES message to respond to the SDD_REQ message.

The SDD_RES message carries the NFCID1 of the target device.

In this way, a master device can search for a target device supporting a specific device type, which can solve a feedback collision problem of multiple target devices.

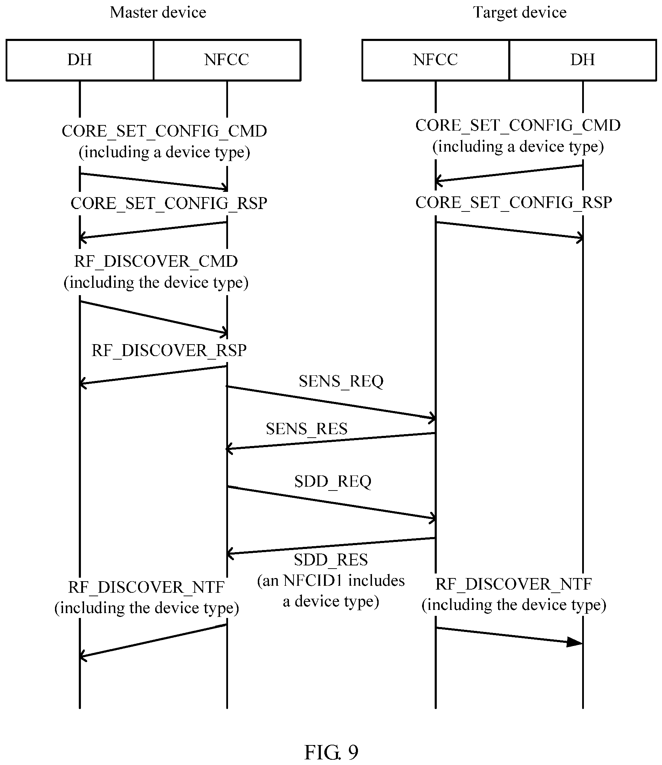

FIG. 9 is a schematic diagram of message exchange between the master device and the target device in the embodiments of FIG. 7 and FIG. 8. For definitions of messages shown in FIG. 9, reference may be made to the embodiments of FIG. 3 to FIG. 4 and FIG. 7 to FIG. 8, and therefore, repeated descriptions are not provided.

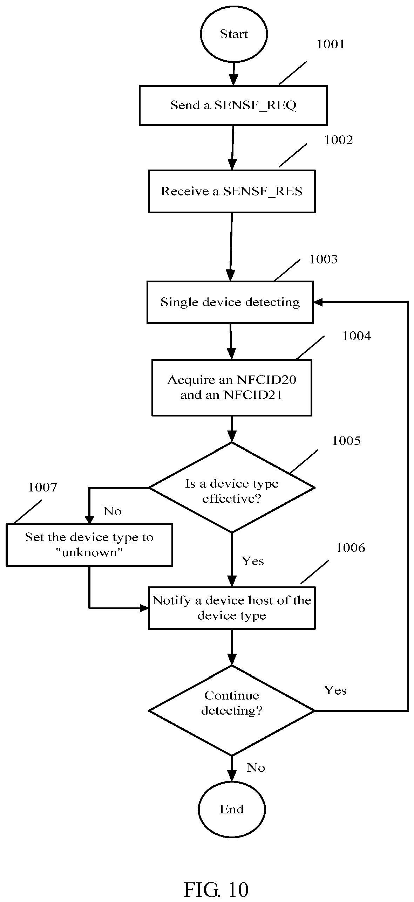

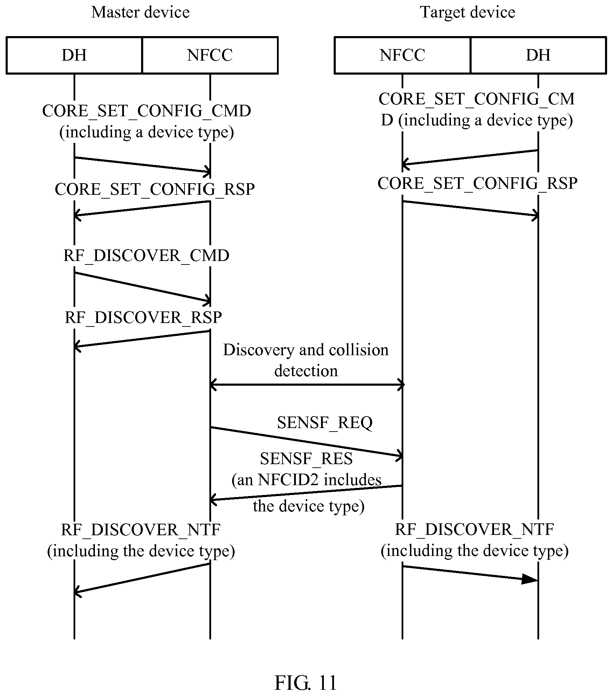

An embodiment of acquiring a device type in an NFC-F passive communication mode is described with reference to FIG. 10 and FIG. 11.

FIG. 10 is a schematic flowchart of a process of acquiring a device type according to an embodiment of the present invention. The method shown in FIG. 10 is executed by a master device. In the embodiment of FIG. 10, it is assumed that two bytes NFCID20 and NFCID21 (that is, the first and second bytes of an NFCID2) are used to carry DT information, but a byte or bit in which the NFCID2 carries the DT information is not limited in the embodiment of the present invention.

1001: A master device sends a SENSF_REQ (a probe request) message to a target device to probe for a surrounding target device.

1002: The master device receives an SENSF_RES (a probe response) message fed back by the target device.

1003: The master device executes single device detection.

1004: The master device acquires an NFCID2 of the target device, and uses an NFCID20 and an NFCID21 as a device type.

1005: The master device detects whether the device type is effective. If the device type is effective, step 1006 is executed, and if the device type is ineffective, step 1007 is executed.

1006: An NFCC of the master device notifies the device type of the target device to a DH of the master device.

1007: Set the device type to "unknown", and then execute step 1006.

1008: The master device determines whether to continue detecting the target device. If yes, step 1003 is executed; otherwise, the process ends.

In this way, exchanging of a device type can be implemented by using an NFCID.

FIG. 11 is a schematic diagram of message exchange between the master device and the target device in the embodiment of FIG. 10. For definitions of messages shown in FIG. 11, reference may be made to the embodiments of FIG. 3 to FIG. 4 and FIG. 10, and therefore, repeated descriptions are not provided.

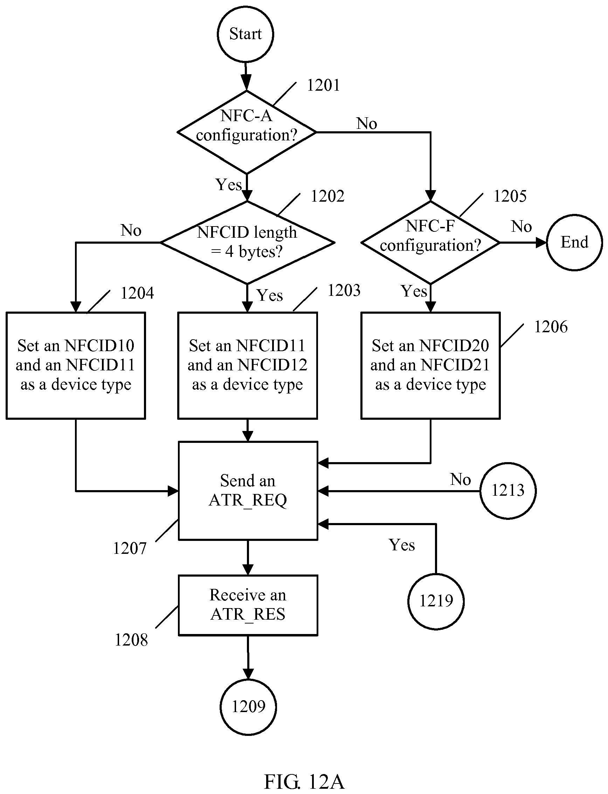

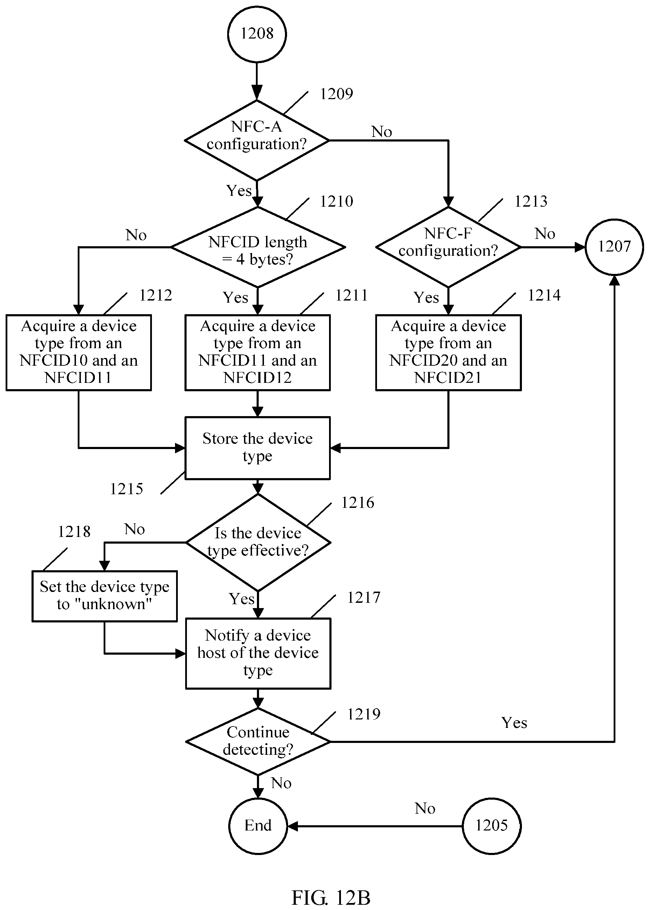

An embodiment of acquiring a device type in an active communication mode is described with reference to FIG. 12 to FIG. 15.

FIG. 12A and FIG. 12B are schematic flowcharts of a process of acquiring a device type according to another embodiment of the present invention. The method shown in FIG. 12A and FIG. 12B is executed by a master device, and operations of a target device are corresponding to those of the master device.

1201: A master device detects configuration information of the master device, so as to determine whether an NFC-A technology is supported. If the NFC-A technology is supported, step 1202 is executed; otherwise, step 1205 is executed.

1202: The master device determines whether a length of an NFCID (represented as NFCID 1 in this case) is 4 bytes. If the length of the NFCID1 is 4 bytes, step 1203 is executed; otherwise, step 1204 is executed.

1203: If the length of the NFCID1 is 4 bytes, set an NFCID 11 and an NFCID 12 as a device type.

1204: If the length of the NFCID1 is 7 bytes or 10 bytes, set an NFCID10 and an NFCID11 as a device type.

1205: The master device determines whether an NFC-F technology is supported. If the NFC-F technology is supported, step 1206 is executed; otherwise, the process ends.

1206: The master device sets an NFCID20 and an NFCID21 of an NFCID (represented as NFCID2 in this case) as a device type.

1207: The master device sends an ATR_REQ (a probe request) message to a target device to probe for a surrounding target device and request to acquire a target device parameter.

1208: After receiving the ATR_REQ message, the target device responds an ATR_RES (a probe response) message to the master device.

The master device repeats steps 1201 to 1208, until responses of all target devices are received.

1209: The master device detects an NFCID value in ATR_RES message, so as to determine whether the NFC-A technology is supported. If the NFC-A technology is supported, step 1210 is executed; otherwise, step 1213 is executed.

1210: The master device determines whether a length of an NFCID (represented as NFCID1 in this case) is 4 bytes. If yes, step 1211 is executed; otherwise, step 1212 is executed.

1211: If the length of the NFCID1 is 4 bytes, acquire an NFCID 11 and an NFCID 12 as a device type.

1212: If the length of the NFCID1 is 7 bytes or 10 bytes, acquire an NFCID10 and an NFCID 11 as a device type.

1213: Determine whether the NFC-F technology is supported. If the NFC-F technology is supported, step 1214 is executed; otherwise, step 1207 is executed.

1214: Acquire an NFCID20 and an NFCID21 as a device type.

1215: The master device stores the acquired device type.

1216: The master device detects whether the device type is effective. If the device type is effective, step 1217 is executed; and if the device type is ineffective, step 1218 is executed.

1217: An NFCC of the master device notifies the device type of the target device to a DH of the master device.

1218: Set the device type to "unknown", and then execute step 1217.

1219: The master device determines whether to continue detecting the target device. If yes, step 1207 is executed; otherwise, the process ends.

In this way, exchanging of a device type can be implemented by using an NFCID.

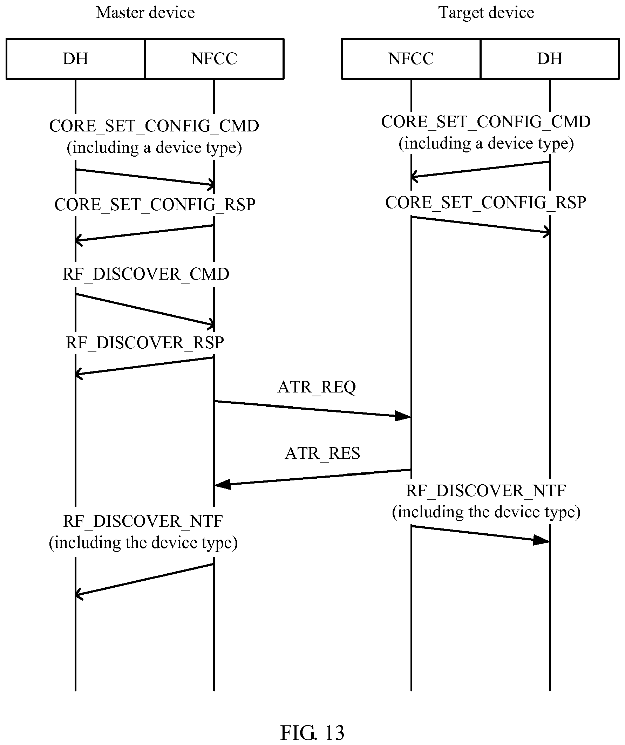

FIG. 13 is a schematic diagram of message exchange between the master device and the target device in the embodiment of FIG. 12. For definitions of messages shown in FIG. 13, reference may be made to the embodiments of FIG. 3 to FIG. 4 and FIG. 12, and therefore, repeated descriptions are not provided.

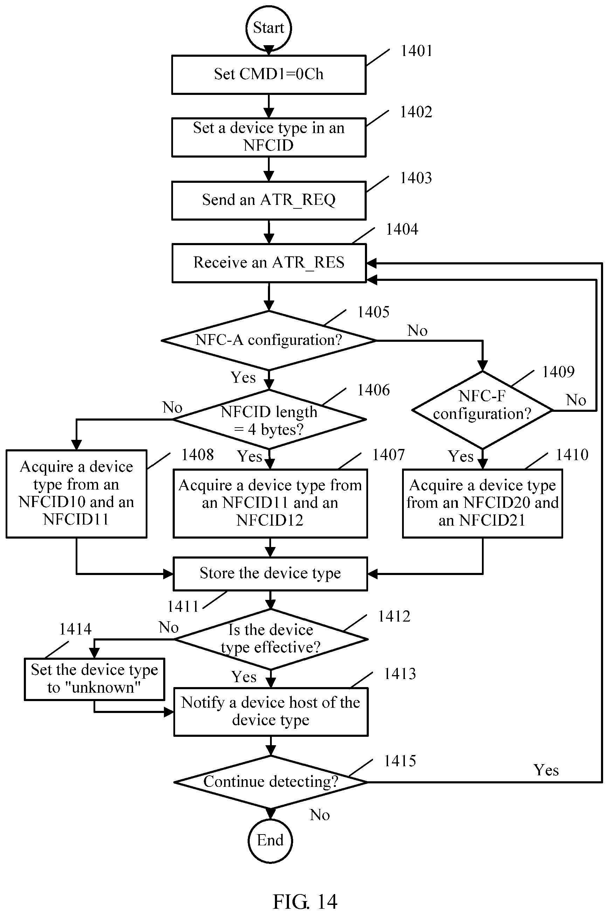

FIG. 14 is a schematic flowchart of a process of searching for a target device supporting a specific device type according to another embodiment of the present invention. The method shown in FIG. 14 is executed by a master device.

1401: A master device sets a CMD1 (command) field in an ATR_REQ message to 0Ch to indicate that the ATR_REQ message is used to search for a target device supporting a specific device type.

1402: The master device sets the first two bytes of an NFCID field in the ATR_REQ message as a device type that is to be searched for.

1403: The master device sends the ATR_REQ message to a target device to probe for a surrounding target device and request to acquire a target device parameter.

1404: The master device receives an ATR_RES message fed back by the target device.

1405: The master device detects an NFCID in the received ATR_RES message, so as to determine whether an NFC-A technology is supported. If the NFC-A technology is supported, step 1406 is executed; otherwise, step 1409 is executed.

1406: The master device determines whether a length of the NFCID (represented as NFCID1 in this case) is 4 bytes. If yes, step 1407 is executed; otherwise, step 1408 is executed.

1407: If the length of the NFCID1 is 4 bytes, acquire an NFCID 11 and an NFCID 12 as a device type.

1408: If the length of the NFCID1 is 7 bytes or 10 bytes, acquire an NFCID10 and an NFCID 11 as a device type.

1409: Determine whether an NFC-F technology is supported. If the NFC-F technology is supported, step 1410 is executed; otherwise, step 1403 is executed.

1410: Acquire an NFCID20 and an NFCID21 as a device type.

1411: The master device stores the acquired device type.

1412: The master device detects whether the device type is effective. If the device type is effective, step 1413 is executed; and if the device type is ineffective, step 1414 is executed.

1413: An NFCC of the master device notifies the device type of the target device to a DH of the master device.

1414: Set the device type to "unknown", and then execute step 1413.

1415: The master device determines whether to continue detecting the target device. If yes, step 1403 is executed; otherwise, the process ends.

In this way, searching of a specific device type can be implemented.

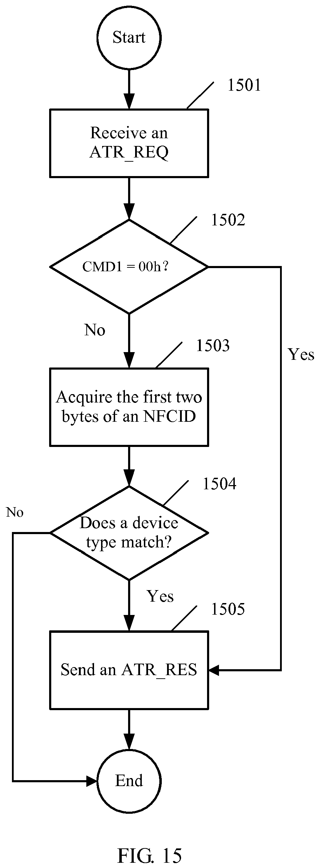

FIG. 15 is a schematic flowchart of a process of searching for a target device supporting a specific device type according to another embodiment of the present invention. The method shown in FIG. 15 is executed by the target device and is corresponding to the method shown in FIG. 14.

1501: A target device receives an ATR_REQ message.

1502: The target device detects a CMD1 value in the ATR_REQ message. If the CMD1=00h, step 1505 is executed; and if CMD1=0Ch, step 1503 is executed.

1503: The target device acquires the first two bytes from an NFCID field in the ATR_REQ message.

1504: The target device determines whether the two bytes match a device type of the target device. If the two bytes match the device type of the target device, step 1505 is executed; otherwise, the process ends.

1505: The target device sends an ATR_RES message to a master device.

In this way, searching of a specific device type can be implemented.

By using two bytes in an NFCID to represent a device type, a current frame format and communication architecture can be reused to a maximum extent, and acquiring of a device type and searching of a target device supporting a specific device type are implemented in NFC-A and NFC-F passive communication modes and in an active communication mode.

An embodiment of an NFC device in the embodiment of the present invention is described in the following.

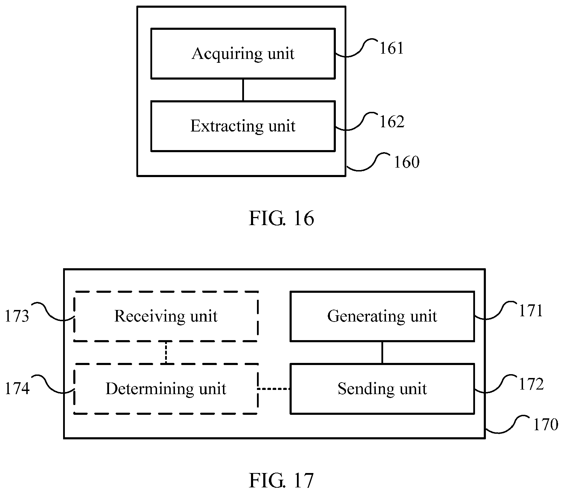

FIG. 16 is a block diagram of an NFC device according to an embodiment of the present invention. An NFC device 160 shown in FIG. 16 includes an acquiring unit 161 and an extracting unit 162.

The acquiring unit 161 is configured to acquire an NFCID of a first device, where the NFCID of the first device carries first DT information, and the first DT information is used to indicate a device type/device capability supported by the first device. The extracting unit is configured to extract the first DT information from the NFCID of the first device.

According to the embodiment of the present invention, an NFCID of an NFC device carries information about a device type/device capability supported by the NFC device, thereby implementing exchanging or searching of a device type by using the NFCID.

The NFC device 160 may execute various processes related to a device that receives an NFCID in the foregoing method embodiments, so as to implement exchanging or searching of a device type/device capability. To avoid repetition, details are not described herein again.

Optionally, as an embodiment, the extracting unit 162 may detect a length of the NFCID of the first device; and extract, according to the length of the NFCID of the first device, a corresponding byte or bit in the NFCID of the first device as the first DT information. For example, according to the example of the NFCID1 in the NFC-A mode in Table 5, when the length of the NFCID1 is 4 bytes, corresponding bytes NFCID11 and NFCID 12 may be extracted as the first DT information; or when the length of the NFCID1 is 7 bytes or 10 bytes, corresponding bytes NFCID 10 and NFCID 11 may be extracted, or corresponding bytes NFCID 11 and NFCID 12 may be extracted as the first DT information.

Optionally, as another embodiment, the extracting unit 162 may extract a predetermined byte or bit in the NFCID of the first device as the first DT information. For example, according to the example of the NFCID2 in the NFC-F mode in Table 5, any two predetermined successive NFCID2x in the NFCID2 may be extracted as the first DT information, for example, the NFCID20 and the NFCID21 in the embodiment of FIG. 10.

Optionally, as another embodiment, the acquiring unit 161 may send a first request message, where the first request message carries second DT information, and the second DT information is used to indicate a device type/device capability to be searched for by the NFC device 160; and receive the NFCID of the first device from the first device which determines that the first DT information matches the second DT information.

Optionally, as another embodiment, if a collision is detected when the NFCID of the first device is received, the acquiring unit 161 may determine an effective collision bit. The acquiring unit 161 may send a second request message, where the second request message carries the effective collision bit. If the number n of effective collision bits is less than the number m of bits of the second DT information, the second request message further carries later (m-n) bits of the second DT information, where m and n are positive integers.

Optionally, as another embodiment, the first request message may be a single device detection request SDD_REQ message or a probe request message ATR_REQ.

FIG. 17 is a block diagram of an NFC device according to another embodiment of the present invention. An NFC device 170 shown in FIG. 17 includes a generating unit 171 and a sending unit 172.

The acquiring unit 171 is configured to generate an NFCID of the NFC device 170, where the NFCID of the NFC device 170 carries first DT information, and the first DT information is used to indicate a device type/device capability supported by the NFC device 170. The sending unit 172 is configured to send the NFCID of the NFC device 170 to a second device.

According to the embodiment of the present invention, an NFCID of an NFC device carries information about a device type/device capability supported by the NFC device, thereby implementing exchanging or searching of a device type by using the NFCID.

The NFC device 170 may execute various processes related to a device that generates and sends an NFCID in the foregoing method embodiments, so as to implement exchanging or searching of a device type/device capability. To avoid repetition, details are not described herein again.

Optionally, as an embodiment, the acquiring unit 171 may fill the first DT information in a predetermined byte or bit in the NFCID of the NFC device 170; or fill, according to a length of the NFCID of the NFC device 170, the first DT information in a corresponding byte or bit in the NFCID of the NFC device 170.

Optionally, as another embodiment, the NFC device 170 further includes a receiving unit 173 and a determining unit 174.

The receiving unit 173 is configured to receive a first request message sent by the second device, where the first request message carries second DT information, and the second DT information is used to indicate a device type/device capability to be searched for by the second device. The determining unit 174 determines whether the NFCID matches the second DT information. The sending unit 172 is configured to: when the determining unit 174 determines that the NFCID matches the second DT information, send the NFCID of the NFC device 170 to the second device.

Optionally, as another embodiment, the receiving unit 173 may further receive a second request message sent by the second device, where the second request message carries an effective collision bit that is determined when the second device detects a collision at the time of receiving the NFCID of the NFC device. The determining unit 174 may further determine, according to a result of matching the effective collision bit and the NFCID of the NFC device, whether to send the NFCID of the NFC device to the second device again.

Optionally, as another embodiment, the number of effect collision bits is n and n is a positive integer. If the effective collision bit is different from the first n bits of the NFCID, the determining unit 174 may determine that the NFCID of the NFC device is no longer to be sent; if the effective collision bit is the same as the first n bits of the NFCID and n≥m, the determining unit 174 may determine that the NFCID of the NFC device is to be sent again, where m is the number of bits of the second DT information, and m is a positive integer; if the effective collision bit is the same as the first n bits of the NFCID and n<m, the determining unit 174 may determine that the NFCID of the NFC device is to be sent again when (m-n) bits after the effective collision bit are the same as a corresponding bit of the NFCID; and if the effective collision bit is the same as the first n bits of the NFCID and n<m, the determining unit 174 may determine that the NFCID of the NFC device is no longer to be sent when (m-n) bits after the effective collision bit are different from a corresponding bit of the NFCID.

Optionally, as another embodiment, the first request message may be a single device detection request SDD_REQ message or a probe request message ATR_REQ.

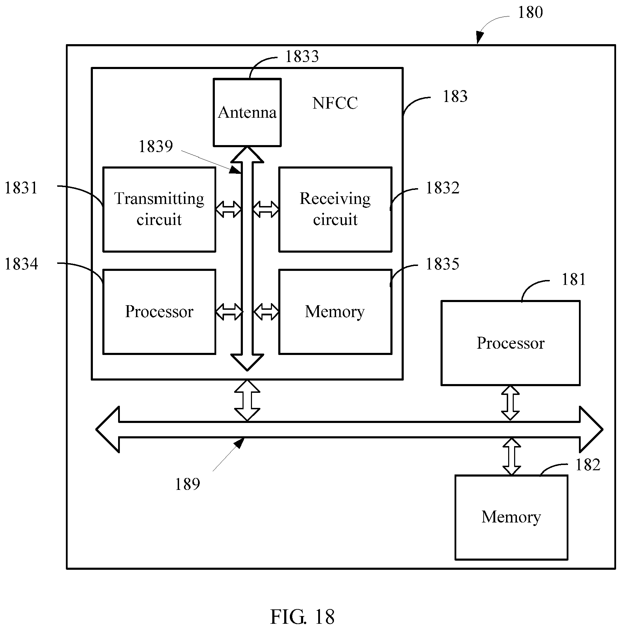

FIG. 18 is a block diagram of an NFC device according to another embodiment of the present invention. An NFC device 180 shown in FIG. 18 includes an NFCC 183. The NFCC 183 includes a transmitting circuit 1831, a receiving circuit 1832, an antenna 1833, a processor 1834, and a memory 1835.

The memory 1835 stores an instruction enabling the processor 1834 to execute the following operations: acquiring an NFCID of a first device, where the NFCID of the first device carries first DT information, and the first DT information is used to indicate a device type/device capability supported by the first device; and extracting the first DT information from the NFCID of the first device.

According to the embodiment of the present invention, an NFCID of an NFC device carries information about a device type/device capability supported by the NFC device, thereby implementing exchanging or searching of a device type/device capability by using the NFCID.

The NFC device 180 may execute various processes related to a device that receives an NFCID in the foregoing method embodiments, so as to implement exchanging or searching of a device type/device capability. To avoid repetition, details are not described herein again.

As shown in FIG. 18, the NFC device 180 further includes a processor 181 and a memory 182. The memory 182 stores an instruction enabling the processor 181 to implement control over the NFCC 183. In this way, the NFCC 183 implements the foregoing function under the control of the processor 181. In other words, the processor 181 implements a function of a device host (DH) in the NFC device 180.

The processor 181, the memory 182, and the NFCC 183 of the NFC device 180 are coupled together by using a bus system 189. In addition to a data bus, a power source bus, a control bus, a status signal bus, and the like are further included. However, for clarity, all buses are marked as the bus system 189 in the figure. A logical interface NCI between the DH and the NFCC may be implemented by using the bus system 189.

The processor 181 generally controls an operation of the NFC device 180, and the processor 181 may be a CPU (Central Processing Unit, central processing unit). The processor 181 may also be another universal processor, digital signal processor (DSP), application-specific integrated circuit (ASIC), field programmable gate array (FPGA), or another programmable logical device, discrete gate or transistor logical device, discrete hardware component, or the like. The universal processor may be a microprocessor, or the processor may be any conventional processor or the like.

The memory 182 may include a read-only memory and a random access memory, and provides instructions and data for the processor 181. The memory 182 may further include a nonvolatile random access memory. For example, the memory 182 may further store information about the device type.

The NFCC 183 may be implemented as an independent chip, and the transmitting circuit 1831, the receiving circuit 1832, and the antenna 1833 implement a radio frequency interface of the NFCC 183. The transmitting circuit 1831 and the receiving circuit 1832 are coupled to the antenna 1833 by using an internal connection 1839. A form of the internal connection 1839 is not limited in the embodiment of the present invention, and the internal connection 1839 may be an internal bus, an internal circuit, or the like.

Optionally, in an embodiment, the transmitting circuit 1831 and the receiving circuit 1832 may be implemented by using a set of circuits, and implement transmitting and receiving functions in a duplex mode.

Functions of the processor 1834 and the memory 1835 of the NFCC 183 may also be implemented by the processor 181 and the memory 182 respectively. In this way, the processor 1834 and the memory 1835 may be removed from the NFCC 183. For example, the memory 182 may store an instruction enabling the processor 181 to execute the following operations: acquiring an NFCID of a first device, where the NFCID of the first device carries first DT information, and the first DT information is used to indicate a device type/device capability supported by the first device; and extracting the first DT information from the NFCID of the first device.

In an implementation process, steps of the foregoing method may be implemented by using an integrated logic circuit or instructions in a software form in the processor 181 or 1834. The steps of the method disclosed with reference to the embodiment of the present invention may be directly executed and completed by using a hardware processor, or executed and completed by using a combination of a hardware module and a software module in a processor. The software module may be located in a storage medium mature in this field, such as a random memory, a flash memory, a read-only memory, a programmable read-only memory, or an electrically erasable programmable memory, or a register. The storage medium is located in the memory 182 or 1835, the processor 181 or 1834 reads information in the memory 182 or 1835, and implements the steps of the foregoing method in combination with hardware thereof. To avoid repetition, details are not described herein again.

Optionally, as an embodiment, the processor 181 or 1834 may detect a length of the NFCID of the first device; and extract, according to the length of the NFCID of the first device, a corresponding byte or bit in the NFCID of the first device as the first DT information. For example, according to the example of the NFCID1 in the NFC-A mode in Table 5, when the length of the NFCID1 is 4 bytes, corresponding bytes NFCID11 and NFCID 12 may be extracted as the first DT information; or when the length of the NFCID1 is 7 bytes or 10 bytes, corresponding bytes NFCID 10 and NFCID 11 may be extracted, or corresponding bytes NFCID 11 and NFCID 12 may be extracted as the first DT information.

Optionally, as another embodiment, the processor 181 or 1834 may extract a predetermined byte or bit in the NFCID of the first device as the first DT information. For example, according to the example of the NFCID2 in the NFC-F mode in Table 5, any two predetermined successive NFCID2x in the NFCID2 may be extracted as the first DT information, for example, the NFCID20 and the NFCID21 in the embodiment of FIG. 10.

Optionally, as another embodiment, the transmitting circuit 1831 may send a first request message by using the antenna 1833, where the first request message carries second DT information, and the second DT information is used to indicate a device type/device capability to be searched for by the NFC device 180. The receiving circuit 1832 may receive, by using the antenna 1833, the NFCID of the first device from the first device, when it is determined, by the first device, that the first DT information matches the second DT information.

Optionally, as another embodiment, if a collision is detected when the NFCID of the first device is received, the processor 181 or 1834 may determine an effective collision bit. The transmitting circuit 1831 may send a second request message by using the antenna 1833, where the second request message carries the effective collision bit. If the number n of effective collision bits is less than the number m of bits of the second DT information, the second request message further carries later (m-n) bits of the second DT information, where m and n are positive integers.

Optionally, as another embodiment, the first request message may be a single device detection request SDD_REQ message or a probe request message ATR_REQ.

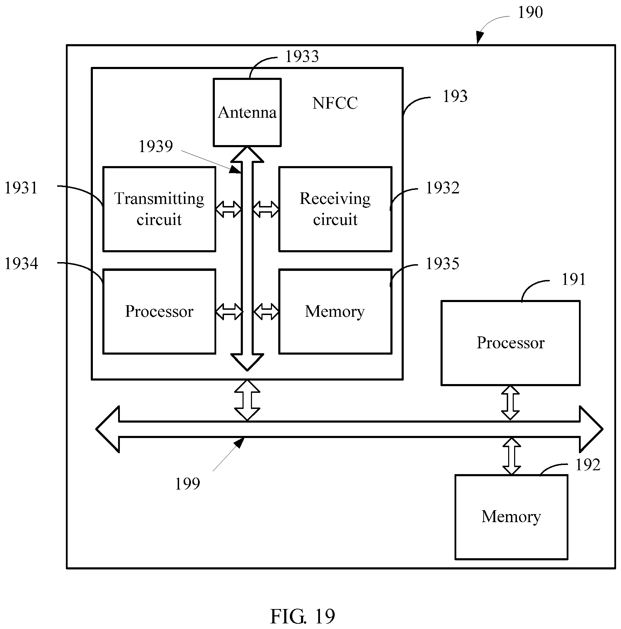

FIG. 19 is a block diagram of an NFC device according to another embodiment of the present invention. An NFC device 190 shown in FIG. 19 includes an NFCC 193. The NFCC 193 includes a transmitting circuit 1931, a receiving circuit 1932, an antenna 1933, a processor 1934, and a memory 1935.

The memory 1935 stores an instruction enabling the processor 1934 to execute the following operation: generating an NFCID of the NFC device 190, where the NFCID of the NFC device 190 carries first DT information, and the first DT information is used to indicate a device type/device capability supported by the NFC device 190. The transmitting circuit 1931 sends the NFCID of the NFC device 190 to a second device by using the antenna 1933.

According to the embodiment of the present invention, an NFCID of an NFC device carries information about a device type/device capability supported by the NFC device, thereby implementing exchanging or searching of a device type/device capability by using the NFCID.

The NFC device 190 may execute various processes related to a device that generates and sends the NFCID in the foregoing method embodiments, so as to implement exchanging or searching of a device type/device capability. To avoid repetition, details are not described herein again.

As shown in FIG. 19, the NFC device 190 further includes a processor 191 and a memory 192. The memory 192 stores an instruction enabling the processor 191 to implement control over the NFCC 193. In this way, the NFCC 193 implements the foregoing function under the control of the processor 191. In other words, the processor 191 implements a function of a device host (DH) in the NFC device 190.

The processor 191, the memory 192, and the NFCC 193 of the NFC device 190 are coupled together by using a bus system 199. In addition to a data bus, a power source bus, a control bus, a status signal bus, and the like are further included. However, for clarity, all buses are marked as the bus system 199 in the figure. A logical interface NCI between the DH and the NFCC may be implemented by using the bus system 199.

The processor 191 generally controls an operation of the NFC device 190, and the processor 191 may be a CPU (Central Processing Unit, central processing unit). The processor 191 may also be another universal processor, digital signal processor (DSP), application-specific integrated circuit (ASIC), field programmable gate array (FPGA), or another programmable logical device, discrete gate or transistor logical device, discrete hardware component, or the like. The universal processor may be a microprocessor, or the processor may be any conventional processor or the like.

The memory 192 may include a read-only memory and a random access memory, and provides instructions and data for the processor 191. The memory 192 may further include a nonvolatile random access memory. For example, the memory 192 may further store information about a device type.

The NFCC 193 may be implemented as an independent chip, and the transmitting circuit 1931, the receiving circuit 1932, and the antenna 1933 implement a radio frequency interface of the NFCC 193. The transmitting circuit 1931 and the receiving circuit 1932 are coupled to the antenna 1933 by using an internal connection 1939. A form of the internal connection 1939 is not limited in the embodiment of the present invention, and the internal connection 1939 may be an internal bus, an internal circuit, or the like.

Optionally, in an embodiment, the transmitting circuit 1931 and the receiving circuit 1932 may be implemented by using a set of circuits, and implement transmitting and receiving functions in a duplex mode.

Functions of the processor 1934 and the memory 1935 of the NFCC 193 may also be implemented by the processor 191 and the memory 192 respectively. In this way, the processor 1934 and the memory 1935 may be removed from the NFCC 193. For example, the memory 192 may store an instruction enabling the processor 191 to execute the following operation: generating an NFCID of the NFC device 190, where the NFCID of the NFC device 190 carries first DT information, and the first DT information is used to indicate a device type/device capability supported by the NFC device 190.

In an implementation process, steps of the foregoing method may be implemented by using an integrated logic circuit or instructions in a software form in the processor 191 or 1934. The steps of the method disclosed with reference to the embodiment of the present invention may be directly executed and completed by using a hardware processor, or executed and completed by using a combination of a hardware module and a software module in a processor. The software module may be located in a storage medium mature in this field, such as a random memory, a flash memory, a read-only memory, a programmable read-only memory, or an electrically erasable programmable memory, or a register. The storage medium is located in the memory 192 or 1935, the processor 191 or 1934 reads information in the memory 192 or 1935, and implements the steps of the foregoing method in combination with hardware thereof. To avoid repetition, details are not described herein again.

Optionally, as an embodiment, the processor 191 may fill the first DT information in a predetermined byte or bit in the NFCID of the NFC device 190; or fill, according to a length of the NFCID of the NFC device 190, the first DT information in a corresponding byte or bit in the NFCID of the NFC device 190.

Optionally, as another embodiment, the receiving circuit 1932 may receive, by using the antenna 1933, a first request message sent by the second device, where the first request message carries second DT information, and the second DT information is used to indicate a device type/device capability to be searched for by the second device. The processor 191 or 1934 determines whether the NFCID matches the second DT information. When the processor 191 or 1934 determines that the NFCID matches the second DT information, the transmitting circuit 1931 sends the NFCID of the NFC device 190 to the second device by using the antenna 1933.

Optionally, as another embodiment, the receiving circuit 1932 may further receive, by using the antenna 1933, a second request message sent by the second device, where the second request message carries an effective collision bit that is determined when the second device detects a collision at the time of receiving the NFCID of the NFC device 190. The processor 191 or 1934 may further determine, according to a result of matching the effective collision bit and the NFCID of the NFC device 190, whether to send the NFCID of the NFC device 190 to the second device again.

Optionally, as another embodiment, the number of effect collision bits is n and n is a positive integer. If the effective collision bit is different from the first n bits of the NFCID, the processor 191 or 1934 may determine that the NFCID of the NFC device 190 is no longer to be sent; if the effective collision bit is the same as the first n bits of the NFCID and n≥m, the processor 191 or 1934 may determine that the NFCID of the NFC device 190 is to be sent again, where m is the number of bits of the second DT information, and m is a positive integer; if the effective collision bit is the same as the first n bits of the NFCID and n<m, the processor 191 or 1934 may determine that the NFCID of the NFC device 190 is to be sent again when (m-n) bits after the effective collision bit are the same as a corresponding bit of the NFCID; and if the effective collision bit is the same as the first n bits of the NFCID and n<m, the processor 191 or 1934 may determine that the NFCID of the NFC device 190 is no longer to be sent when (m-n) bits after the effective collision bit are different from a corresponding bit of the NFCID.

Optionally, as another embodiment, the first request message may be a single device detection request SDD_REQ message or a probe request message ATR_REQ.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A near field communication method, comprising:
Acquiring (101), by a second device, a near field communication identification NFCID of a first device, wherein the NFCID of the first device carries first device type DT information, and the first DT information is used to indicate a device type such as a cash register or a fax supported by the first device; and
extracting (102), by the second device, the first DT information from the NFCID of the first device,
wherein the acquiring, by the second device, a near field communication identification NFCID of a first device comprises:
sending, by the second device, a first request message, wherein the first request message carries second DT information, and the second DT information is used to indicate a device type to be searched for by the second device; and
receiving, by the second device, the NFCID of the first device from the first device, when it is determined, by the first device, that the first DT information matches the second DT information.

2. The method according to claim 1, wherein the extracting, by the second device, the first DT information from the NFCID of the first device comprises:
detecting, by the second device, a length of the NFCID of the first device; and
extracting, by the second device according to the length of the NFCID of the first device, a corresponding byte or bit in the NFCID of the first device as the first DT information.

3. The method according to claim 1, wherein the extracting, by the second device, the first DT information from the NFCID of the first device comprises:
extracting, by the second device, a predetermined byte or bit in the NFCID of the first device as the first DT information.

4. The method according to claim 1, wherein the receiving, by the second device, the NFCID of the first device from the first device which determines that the first DT information matches the second DT information comprises:
if the second device detects a collision when receiving the NFCID of the first device, determining an effective collision bit; and
sending, by the second device, a second request message, wherein the second request message carries the effective collision bit; wherein
if the number n of effective collision bits is less than the number m of bits of the second DT information, the second request message further carries later (m-n) bits of the second DT information, wherein m and n are positive integers.

5. The method according to claim 1, wherein the first request message is a single device detection request SDD_REQ message or a probe request message ATR_REQ.

6. A near field communication method, comprising:
generating (201), by a first device, an NFCID of the first device, wherein the NFCID of the first device carries first device type DT information, and the first DT information is used to indicate a device type such as a cash register or a fax supported by the first device; and
sending (202), by the first device, the NFCID of the first device to a second device,
wherein before the sending, by the first device, the NFCID of the first device to the second device, the method further comprises:
receiving, by the first device, a first request message sent by the second device, wherein the first request message carries second DT information, and the second DT information is used to indicate a device type to be searched for by the second device;
determining, by the first device, whether the NFCID matches the second DT information; wherein
the sending, by the first device, the NFCID of the first device to the second device comprises: when it is determined that the NFCID matches the second DT information, sending, by the first device, the NFCID of the first device to the second device.

7. The method according to claim 6, wherein the generating, by a first device, an NFCID of the first device comprises:
filling, by the first device, the first DT information in a predetermined byte or bit in the NFCID of the first device; or
filling, by the first device according to a length of the NFCID of the first device, the first DT information in a corresponding byte or bit in the NFCID of the first device.

8. The method according to claim 6, wherein the method further comprises:
receiving, by the first device, a second request message sent by the second device, wherein the second request message carries an effective collision bit that is determined when the second device detects a collision at the time of receiving the NFCID of the first device; and
determining, by the first device according to a result of matching the effective collision bit and the NFCID of the first device, whether to send the NFCID of the first device to the second device again.

9. The method according to claim 8, wherein the number of effective collision bits is n and n is a positive integer; and
the determining, by the first device according to a result of matching the effective collision bit and the NFCID of the first device, whether to send the NFCID of the first device to the second device again comprises:
if the effective collision bit is different from the first n bits of the NFCID, determining that the NFCID of the first device is no longer to be sent;
if the effective collision bit is the same as the first n bits of the NFCID and n≥m, determining that the NFCID of the first device is to be sent again, wherein m is the number of bits of the second DT information and m is a positive integer;
if the effective collision bit is the same as the first n bits of the NFCID and n<m, determining that the NFCID of the first device is to be sent again when (m-n) bits after the effective collision bit are the same as a corresponding bit of the NFCID,; and
if the effective collision bit is the same as the first n bits of the NFCID and n<m, determining that the NFCID of the first device is no longer to be sent when (m-n) bits after the effective collision bit are different from a corresponding bit of the NFCID.

10. The method according to claim 6, wherein the first request message is a single device detection request SDD_REQ message or a probe request message ATR_REQ.

11. A near field communication device (170), comprising:
a generating unit (171), configured to generate an NFCID of the near field communication device, wherein the NFCID of the near field communication device carries first device type DT information, and the first DT information is used to indicate a device type supported by the near field communication device; and
a sending unit (172), configured to send the NFCID of the near field communication device to a second device,
wherein the near field communication device further comprises:
a receiving unit (173), configured to receive a first request message sent by the second device, wherein the first request message carries second DT information, and the second DT information is used to indicate a device type to be searched for by the second device; and
a determining unit (174), configured to determine whether the NFCID matches the second DT information; wherein
the sending unit (172) is specifically configured to: when the determining unit determines that the NFCID matches the second DT information, send the NFCID of the near field communication device to the second device.

12. The near field communication device according to claim 11, wherein the generating unit is specifically configured to fill the first DT information in a predetermined byte or bit in the NFCID of the near field communication device; or fill, according to a length of the NFCID of the near field communication device, the first DT information in a corresponding byte or bit in the NFCID of the near field communication device.

13. The near field communication device according to claim 11, wherein:
the receiving unit is further configured to receive a second request message sent by the second device, wherein the second request message carries an effective collision bit that is determined when the second device detects a collision when receiving the NFCID of the near field communication device; and
the determining unit is further configured to determine, according to a result of matching the effective collision bit and the NFCID of the first device, whether to send the NFCID of the near field communication device to the second device again.

14. The near field communication device according to claim 13, wherein the number of effective collision bits is n and n is a positive integer; and
the determining unit is specifically configured to:
if the effective collision bit is different from the first n bits of the NFCID, determine that the NFCID of the near field communication device is no longer to be sent;
if the effective collision bit is the same as the first n bits of the NFCID and n≥m, determine that the NFCID of the near field communication device is to be sent again, wherein m is the number of bits of the second DT information, and m is a positive integer;
if the effective collision bit is the same as the first n bits of the NFCID and n<m, determine that the NFCID of the near field communication device is to be sent again when (m-n) bits after the effective collision bit are the same as a corresponding bit of the NFCID; and
if the effective collision bit is the same as the first n bits of the NFCID and n<m, determine that the NFCID of the near field communication device is no longer to be sent when (m-n) bits after the effective collision bit are different from a corresponding bit of the NFCID.

## Patentansprüche

1. Nahfeldkommunikationsverfahren, das Folgendes umfasst:
Erfassen (101) einer Nahfeldkommunikationsidentifizierung NFCID eines ersten Geräts durch ein zweites Gerät, wobei die NFCID des ersten Geräts erste Informationen zu einem Gerätetyp DT transportiert und die ersten DT-Informationen verwendet werden, um einen vom ersten Gerät unterstützten Gerätetyp wie eine Registrierkasse oder ein Fax anzugeben; und
Extrahieren (102) der ersten DT-Informationen aus der NFCID des ersten Geräts durch das zweite Gerät,
wobei das Erfassen einer Nahfeldkommunikationsidentifizierung NFCID eines ersten Geräts durch das zweite Gerät Folgendes umfasst:
Senden einer ersten Anforderungsnachricht durch das zweite Gerät, wobei die erste Anforderungsnachricht zweite DT-Informationen transportiert und die zweiten DT-Informationen verwendet werden, um einen Gerätetyp anzugeben, nach dem durch das zweite Gerät gesucht werden soll; und
Empfangen der NFCID des ersten Geräts vom ersten Gerät durch das zweite Gerät, wenn durch das erste Gerät bestimmt wird, dass die ersten DT-Informationen mit den zweiten DT-Informationen übereinstimmen.

2. Verfahren nach Anspruch 1, wobei das Extrahieren der ersten DT-Informationen aus der NFCID des ersten Geräts durch das zweite Gerät Folgendes umfasst:
Detektieren einer Länge der NFCID des ersten Geräts durch das zweite Gerät; und Extrahieren eines entsprechenden Bytes oder Bits in der NFCID des ersten Geräts als die ersten DT-Informationen durch das zweite Gerät gemäß der Länge der NFCID des ersten Geräts.

3. Verfahren nach Anspruch 1, wobei das Extrahieren der ersten DT-Informationen aus der NFCID des ersten Geräts durch das zweite Gerät Folgendes umfasst:
Extrahieren eines vorher bestimmten Bytes oder Bits in der NFCID des ersten Geräts als die ersten DT-Informationen durch das zweite Gerät.

4. Verfahren nach Anspruch 1, wobei das Empfangen der NFCID des ersten Geräts vom ersten Gerät, das bestimmt, dass die ersten DT-Informationen mit den zweiten DT-Informationen übereinstimmen, durch das zweite Gerät Folgendes umfasst:
falls das zweite Gerät eine Kollision beim Empfangen der NFCID des ersten Geräts detektiert, Bestimmen eines effektiven Kollisionsbits; und
Senden einer zweiten Anforderungsnachricht durch das zweite Gerät, wobei die zweite Anforderungsnachricht das effektive Kollisionsbit transportiert; wobei die zweite Anforderungsnachricht, falls die Zahl n der effektiven Kollisionsbits kleiner ist als die Zahl m der Bits der zweiten DT-Informationen, des Weiteren spätere (m-n) Bits der zweiten DT-Informationen transportiert, wobei m und n positive ganze Zahlen sind.

5. Verfahren nach Anspruch 1, wobei die erste Anforderungsnachricht eine "Single-Device-Detection-Request"-SDD_REQ-Nachricht oder eine "Probe-Request"-Nachricht ATR_REQ ist.

6. Nahfeldkommunikationsverfahren, das Folgendes umfasst:
Generieren (201) einer NFCID eines ersten Geräts durch das erste Gerät, wobei die NFCID des ersten Geräts erste Informationen zu einem Gerätetyp DT transportiert und die ersten DT-Informationen verwendet werden, um einen vom ersten Gerät unterstützten Gerätetyp wie eine Registrierkasse oder ein Fax anzugeben; und
Senden (202) der NFCID des ersten Geräts durch das erste Gerät an ein zweites Gerät;
wobei das Verfahren vor dem Senden der NFCID des ersten Geräts durch das erste Gerät an das zweite Gerät des Weiteren Folgendes umfasst:
Empfangen einer durch das zweite Gerät gesendeten ersten Anforderungsnachricht durch das erste Gerät, wobei die erste Anforderungsnachricht zweite DT-Informationen transportiert und die zweiten DT-Informationen verwendet werden, um einen Gerätetyp anzugeben, nach dem durch das zweite Gerät gesucht werden soll;
Bestimmen durch das erste Gerät, ob die NFCID mit den zweiten DT-Informationen übereinstimmt; wobei das Senden der NFCID des ersten Geräts durch das erste Gerät an das zweite Gerät Folgendes umfasst: wenn bestimmt wird, dass die NFCID mit den zweiten DT-Informationen übereinstimmt, Senden der NFCID des ersten Geräts durch das erste Gerät an das zweite Gerät.

7. Verfahren nach Anspruch 6, wobei das Generieren einer NFCID eines ersten Geräts durch das erste Gerät Folgendes umfasst:
Einfügen der ersten DT-Informationen in ein vorher bestimmtes Byte oder Bit in der NFCID des ersten Geräts durch das erste Gerät; oder
Einfügen der ersten DT-Informationen in ein entsprechendes Byte oder Bit in der NFCID des ersten Geräts durch das erste Gerät gemäß einer Länge der NFCID des ersten Geräts.

8. Verfahren nach Anspruch 6, wobei das Verfahren des Weiteren Folgendes umfasst:
Empfangen einer durch das zweite Gerät gesendeten zweiten Anforderungsnachricht durch das erste Gerät, wobei die zweite Anforderungsnachricht ein effektives Kollisionsbit transportiert, das bestimmt wird, wenn das zweite Gerät eine Kollision zum Zeitpunkt des Empfangens der NFCID des ersten Geräts detektiert; und
Bestimmen durch das erste Gerät gemäß einem Ergebnis beim Abgleichen des effektiven Kollisionsbits und der NFCID des ersten Geräts, ob die NFCID des ersten Geräts erneut an das zweite Gerät gesendet werden soll.

9. Verfahren nach Anspruch 8, wobei die Zahl der effektiven Kollisionsbits n und n eine positive ganze Zahl ist; und
das Bestimmen durch das erste Gerät gemäß einem Ergebnis beim Abgleichen des effektiven Kollisionsbits und der NFCID des ersten Geräts, ob die NFCID des ersten Geräts erneut an das zweite Gerät gesendet werden soll, Folgendes umfasst:
falls das effektive Kollisionsbit von den ersten n Bits der NFCID abweicht, Bestimmen, dass die NFCID des ersten Geräts nicht mehr gesendet werden soll;
falls das effektive Kollisionsbit gleich den ersten n Bits der NFCID ist und n≥m, Bestimmen, dass die NFCID des ersten Geräts erneut gesendet werden soll, wobei m die Zahl der Bits der zweiten DT-Informationen und m eine positive ganze Zahl ist;
falls das effektive Kollisionsbit gleich den ersten n Bits der NFCID ist und n<m, Bestimmen, dass die NFCID des ersten Geräts erneut gesendet werden soll, wenn (m-n) Bits nach dem effektiven Kollisionsbit gleich einem entsprechenden Bit der NFCID sind; und,
falls das effektive Kollisionsbit gleich den ersten n Bits der NFCID ist und n<m, Bestimmen, dass die NFCID des ersten Geräts nicht mehr gesendet werden soll, wenn (m-n) Bits nach dem effektiven Kollisionsbit von einem entsprechenden Bit der NFCID abweichen.

10. Verfahren nach Anspruch 6, wobei die erste Anforderungsnachricht eine "Single-Device-Detection-Request"-SDD_REQ-Nachricht oder eine "Probe-Request"-Nachricht ATR_REQ ist.

11. Nahfeldkommunikationsgerät (170), das Folgendes umfasst:
eine Generierungseinheit (171), die konfiguriert ist zum Generieren einer NFCID des Nahfeldkommunikationsgeräts, wobei die NFCID des Nahfeldkommunikationsgeräts erste Informationen zu einem Gerätetyp DT transportiert und die ersten DT-Informationen verwendet werden, um einen vom Nahfeldkommunikationsgerät unterstützten Gerätetyp anzugeben; und
eine Sendeeinheit (172), die konfiguriert ist zum Senden der NFCID des Nahfeldkommunikationsgeräts an ein zweites Gerät,
wobei das Nahfeldkommunikationsgerät des Weiteren Folgendes umfasst:
eine Empfangseinheit (173), die konfiguriert ist zum Empfangen einer durch das zweite Gerät gesendeten ersten Anforderungsnachricht, wobei die erste Anforderungsnachricht zweite DT-Informationen transportiert und die zweiten DT-Informationen verwendet werden, um einen Gerätetyp anzugeben, nach dem durch das zweite Gerät gesucht werden soll; und
eine Bestimmungseinheit (174), die konfiguriert ist zum Bestimmen, ob die NFCID mit den zweiten DT-Informationen übereinstimmt; wobei
die Sendeeinheit (172) speziell zu Folgendem konfiguriert ist: wenn die Bestimmungseinheit bestimmt, dass die NFCID mit den zweiten DT-Informationen übereinstimmt, Senden der NFCID des Nahfeldkommunikationsgeräts an das zweite Gerät.

12. Nahfeldkommunikationsgerät nach Anspruch 11, wobei die Generierungseinheit speziell konfiguriert ist zum Einfügen der ersten DT-Informationen in ein vorher bestimmtes Byte oder Bit in der NFCID des Nahfeldkommunikationsgeräts; oder zum Einfügen der ersten DT-Informationen in ein entsprechendes Byte oder Bit in der NFCID des Nahfeldkommunikationsgeräts gemäß einer Länge der NFCID des Nahfeldkommunikationsgeräts.

13. Nahfeldkommunikationsgerät nach Anspruch 11, wobei:
die Empfangseinheit des Weiteren konfiguriert ist zum Empfangen einer durch das zweite Gerät gesendeten zweiten Anforderungsnachricht, wobei die zweite Anforderungsnachricht ein effektives Kollisionsbit transportiert, das bestimmt wird, wenn das zweite Gerät eine Kollision beim Empfangen der NFCID des Nahfeldkommunikationsgeräts detektiert; und
die Bestimmungseinheit des Weiteren konfiguriert ist zum Bestimmen gemäß einem Ergebnis beim Abgleichen des effektiven Kollisionsbits und der NFCID des ersten Geräts, ob die NFCID des Nahfeldkommunikationsgeräts erneut an das zweite Gerät gesendet werden soll.

14. Nahfeldkommunikationsgerät nach Anspruch 13, wobei die Zahl der effektiven Kollisionsbits n und n eine positive ganze Zahl ist; und
die Bestimmungseinheit speziell zu Folgendem konfiguriert ist:
falls das effektive Kollisionsbit von den ersten n Bits der NFCID abweicht, Bestimmen, dass die NFCID des Nahfeldkommunikationsgeräts nicht mehr gesendet werden soll;
falls das effektive Kollisionsbit gleich den ersten n Bits der NFCID ist und n≥m, Bestimmen, dass die NFCID des Nahfeldkommunikationsgeräts erneut gesendet werden soll, wobei m die Zahl der Bits der zweiten DT-Informationen und m eine positive ganze Zahl ist;
falls das effektive Kollisionsbit gleich den ersten n Bits der NFCID ist und n<m, Bestimmen, dass die NFCID des Nahfeldkommunikationsgeräts erneut gesendet werden soll, wenn (m-n) Bits nach dem effektiven Kollisionsbit gleich einem entsprechenden Bit der NFCID sind; und,
falls das effektive Kollisionsbit gleich den ersten n Bits der NFCID ist und n<m, Bestimmen, dass die NFCID des Nahfeldkommunikationsgeräts nicht mehr gesendet werden soll, wenn (m-n) Bits nach dem effektiven Kollisionsbit von einem entsprechenden Bit der NFCID abweichen.

## Revendications

1. Procédé de communication en champ proche, comprenant :
l'acquisition (101), par un second dispositif, d'une identification de communication en champ proche NFCID d'un premier dispositif, dans lequel le NFCID du premier dispositif porte des premières informations de type de dispositif DT, et les premières informations DT sont utilisées pour indiquer un type de dispositif tel qu'une caisse enregistreuse ou un télécopieur pris en charge par le premier dispositif ; et
l'extraction (102), par le second dispositif, des premières informations DT à partir du NFCID du premier dispositif,
dans lequel l'acquisition, par le second dispositif, d'une identification de communication en champ proche NFCID d'un premier dispositif comprend :
l'envoi, par le second dispositif, d'un premier message de requête, dans lequel le premier message de requête porte des secondes informations DT, et les secondes informations DT sont utilisées pour indiquer un type de dispositif que doit rechercher le second dispositif ; et
la réception, par le second dispositif, du NFCID du premier dispositif depuis le premier dispositif, quand il est déterminé, par le premier dispositif, que les premières informations DT correspondent aux secondes informations DT.

2. Procédé selon la revendication 1, dans lequel l'extraction, par le second dispositif, des premières informations DT à partir du NFCID du premier dispositif comprend :
la détection, par le second dispositif, d'une longueur du NFCID du premier dispositif ; et
l'extraction, par le second dispositif en fonction de la longueur du NFCID du premier dispositif, d'une partie ou d'un bit correspondant dans le NFCID du premier dispositif comme premières informations DT.

3. Procédé selon la revendication 1, dans lequel l'extraction, par le second dispositif, des premières informations DT à partir du NFCID du premier dispositif comprend :
l'extraction, par le second dispositif, d'un octet ou d'un bit prédéterminé dans le NFCID du premier dispositif comme premières informations DT.

4. Procédé selon la revendication 1, dans lequel la réception, par le second dispositif, du NFCID du premier dispositif depuis le premier dispositif qui détermine que les premières informations DT correspondent aux secondes informations DT comprend :
si le second dispositif détecte une collision lors de la réception du NFCID du premier dispositif, la détermination d'un bit de collision effective ; et
l'envoi, par le second dispositif, d'un second message de requête, dans lequel le second message de requête porte le bit de collision effective ; dans lequel
si le nombre n de bits de collision effective est inférieur au nombre m de bits des secondes informations DT, le second message de requête porte en outre des (m-n) bits ultérieurs des secondes informations DT, dans lequel m et n sont des nombres positifs.

5. Procédé selon la revendication 1, dans lequel le premier message de requête est un message de requête de détection de dispositif unique SDD_REQ ou un message de requête de sondage ATR_REQ.

6. Procédé de communication en champ proche, comprenant :
la génération (201), par un premier dispositif, d'un NFCID du premier dispositif, dans lequel le NFCID du premier dispositif porte des premières informations de type de dispositif DT, et les premières informations DT sont utilisées pour indiquer un type de dispositif tel qu'une caisse enregistreuse ou un télécopieur pris en charge par le premier dispositif ; et
l'envoi (202), par le premier dispositif, du NFCID du premier dispositif à un second dispositif,
dans lequel avant l'envoi, par le premier dispositif, du NFCID du premier dispositif au second dispositif, le procédé comprend en outre :
la réception, par le premier dispositif, d'un premier message de requête envoyé par le second dispositif, dans lequel le premier message de requête porte les secondes informations DT, et les secondes informations DT sont utilisées pour indiquer un type de dispositif que doit rechercher le second dispositif ;
la détermination, par le premier dispositif, que le NFCID correspond ou non aux secondes informations DT ; dans lequel l'envoi, par le premier dispositif, du NFCID du premier dispositif au second dispositif comprend : quand il est déterminé que le NFCID correspond aux secondes informations DT, l'envoi, par le premier dispositif, du NFCID du premier dispositif au second dispositif.

7. Procédé selon la revendication 6, dans lequel la génération, par un premier dispositif, d'un NFCID du premier dispositif comprend :
le remplissage, par le premier dispositif, des premières informations DT dans un octet ou un bit prédéterminé dans le NFCID du premier dispositif ; ou
le remplissage, par le premier dispositif en fonction d'une longueur du NFCID du premier dispositif, les premières informations DT dans un octet ou un bit correspondant dans le NFCID du premier dispositif.

8. Procédé selon la revendication 6, le procédé comprenant en outre :
la réception, par le premier dispositif, d'un second message de requête envoyé par le second dispositif, dans lequel le second message de requête porte un bit de collision effective qui est déterminé quand le second dispositif détecte une collision à la réception du NFCID du premier dispositif ; et
la détermination, par le premier dispositif en fonction d'un résultat de concordance du bit de collision effective et du NFCID du premier dispositif, qu'il convient ou non d'envoyer à nouveau le NFCID du premier dispositif au second dispositif.

9. Procédé selon la revendication 8, dans lequel le nombre de bits de collision effective est n et n est un nombre entier positif ; et
la détermination, par le premier dispositif en fonction d'un résultat de concordance du bit de collision effective et du NFCID du premier dispositif, qu'il convient ou non d'envoyer à nouveau le NFCID du premier dispositif au second dispositif comprend :
si le bit de collision effective est différent des n premiers bits du NFCID, la détermination que le NFCID du premier dispositif ne doit plus être envoyé ;
si le bit de collision effective est identique aux n premiers bits du NFCID et n≥m, la détermination que le NFCID du premier dispositif doit être envoyé à nouveau, dans lequel m est le nombre de bits des secondes informations DT et m est un nombre entier positif ;
si le bit de collision effective est identique aux n premiers bits du NFCID et n<m, la détermination que le NFCID du premier dispositif doit être envoyé à nouveau quand (m-n) bits après le bit de collision effective sont identiques à un bit correspondant du NFCID ; et
si le bit de collision effective est identique aux n premiers bits du NFCID et n<m, la détermination que le NFCID du premier dispositif ne doit plus être envoyé quand (m-n) bits après le bit de collision effective diffèrent d'un bit correspondant du NFCID.

10. Procédé selon la revendication 6, dans lequel le premier message de requête est un message de requête de détection de dispositif unique SDD_REQ ou un message de requête de sondage ATR_REQ.

11. Dispositif de communication en champ proche (170), comprenant :
une unité de génération (171), configurée pour générer un NFCID du dispositif de communication en champ proche,
dans lequel le NFCID du dispositif de communication en champ proche porte des premières informations de type de dispositif DT, et les premières informations DT sont utilisées pour indiquer un type de dispositif pris en charge par le dispositif de communication en champ proche ; et
une unité d'envoi (172), configurée pour envoyer le NFCID du dispositif de communication en champ proche à un second dispositif, le dispositif de communication en champ proche comprenant en outre :
une unité de réception (173), configurée pour recevoir un premier message de requête envoyé par le second dispositif, dans lequel le premier message de requête porte des secondes informations DT, et les secondes informations DT sont utilisées pour indiquer un type de dispositif que doit rechercher le second dispositif ; et
une unité de détermination (174), configurée pour déterminer que le NFCID correspond ou non aux secondes informations DT ; dans lequel l'unité d'envoi (172) est configurée spécifiquement pour : quand l'unité de détermination détermine que le NFCID correspond aux secondes informations DT, envoyer le NFCID du dispositif de communication en champ proche au second dispositif.

12. Dispositif de communication en champ proche selon la revendication 11, dans lequel l'unité de génération est configurée spécifiquement pour remplir les premières informations DT dans un octet ou un bit prédéterminé dans le NFCID du dispositif de communication en champ proche ; ou remplir, en fonction d'une longueur du NFCID du dispositif de communication en champ proche, les premières informations DT dans un octet ou un bit correspondant dans le NFCID du dispositif de communication en champ proche.

13. Dispositif de communication en champ proche selon la revendication 11, dans lequel :
l'unité de réception est configurée en outre pour recevoir un second message de requête envoyé par le second dispositif, dans lequel le second message de requête porte un bit de collision effective qui est déterminé quand le second dispositif détecte une collision à la réception du NFCID du dispositif de communication en champ proche ; et
l'unité de détermination est configurée en outre pour déterminer, en fonction d'un résultat de concordance du bit de collision effective et du NFCID du premier dispositif, qu'il convient ou non d'envoyer à nouveau le NFCID du dispositif de communication en champ proche au second dispositif.

14. Dispositif de communication en champ proche selon la revendication 13, dans lequel le nombre de bits de collision effective est n et n est un nombre entier positif ; et l'unité de détermination est configurée spécifiquement pour :
si le bit de collision effective est différent des n premiers bits du NFCID, déterminer que le NFCID du dispositif de communication en champ proche ne doit plus être envoyé ;
si le bit de collision effective est identique aux n premiers bits du NFCID et n≥m, déterminer que le NFCID du dispositif de communication en champ proche doit être envoyé à nouveau, dans lequel m est le nombre de bits des secondes informations DT et m est un nombre entier positif ;
si le bit de collision effective est identique aux n premiers bits du NFCID et n<m, déterminer que le NFCID du dispositif de communication en champ proche doit être envoyé à nouveau quand (m-n) bits après le bit de collision effective sont identiques à un bit correspondant du NFCID ; et
si le bit de collision effective est identique aux n premiers bits du NFCID et n<m, déterminer que le NFCID du dispositif de communication en champ proche ne doit plus être envoyé quand (m-n) bits après le bit de collision effective diffèrent d'un bit correspondant du NFCID.
